# EUROPÄISCHE PATENTSCHRIFT

(11) **EP 3 056 499 B1**
(45) Veröffentlichungstag und Bekanntmachung des Hinweises auf die Patenterteilung: **18.04.2018**
(21) Anmeldenummer: 15155062.1
(22) Anmeldetag: 13.02.2015
(51) Int. Cl.: C07F 5/00

(54) **Verfahren zur Herstellung von Alkylindium-Verbindungen und deren Verwendung**
Method for the preparation of alkyl indium compounds and their use
Procédé de fabrication de composés alkylindium et leur utilisation

(43) Veröffentlichungstag der Anmeldung: 17.08.2016
(73) Patentinhaber: Umicore AG & Co. KG, 63457 Hanau-Wolfgang (DE)
(72) Erfinder: Frey, Annika, 63457 Hanau (DE); Karch, Ralf, 63801 Kleinostheim (DE); Rivas-Nass, Andreas, 64625 Bensheim (DE); Woerner, Eileen, 61130 Nidderau (DE); Doppiu, Angelino, 63500 Seligenstadt (DE)

(56) Entgegenhaltungen:
- WO-A1-2015/024893
- WO-A1-2015/024894
- US-A- 5 663 390

## Beschreibung

Gegenstand der Erfindung ist ein Verfahren zur Herstellung von Alkylindiumsesquichlorid gekennzeichnet durch die allgemeine Formel R₃In₂Cl₃ (nachfolgend auch als Verbindung (A) bezeichnet) in hoher Ausbeute sowie mit hoher Selektivität und Reinheit.

Das erfindungsgemäß hergestellte Alkylindiumsesquichlorid eignet sich, auch aufgrund der hohen Reinheit und Ausbeute, besonders zur bedarfsgerechten Herstellung Indium-haltiger Präkursoren, bevorzugt solcher der allgemeinen Formel R₃In (nachfolgend auch als Verbindung (B) bezeichnet) oder R₂InR' (nachfolgend auch als Verbindung (C) bezeichnet). Die mit hoher Ausbeute und in hoher Reinheit aus Verbindung (A) erhältlichen Indium-haltigen Präkursoren sind besonders geeignet für die metallorganische chemische Gasphasenabscheidung (MOCVD; metal organic chemical vapour deposition, auch bekannt als metallorganische Gasphasenepitaxie (MOVPE; metal organic chemical vapor phase epitaxy)).

Sofern gemäß dieser Erfindung der Begriff "Verfahren" verwendet wird, ist damit immer das Verfahren zur Herstellung der Verbindung (A) und das darauf aufsetzende optionale Verfahren zur Herstellung Indium-haltiger Präkursoren, vorzugsweise der Verbindungen (B) oder (C), gemeint.

### Stand der Technik

Im Stand der Technik sind verschiedene Verfahren zur Herstellung von Verbindungen, die üblicherweise als metallorganische Präkursoren für MOCVD-Prozesse eingesetzt werden, beziehungsweise deren Vorstufen, nachfolgend vereinfacht als "Präkursor-Vorstufe" bezeichnet, beschrieben.

"Präkursor-Vorstufen" sind im Sinne dieser Erfindung solche, die durch weitere Reaktionsschritte zu den eigentlichen metallorganischen Präkursoren (kurz als "Präkursoren" oder "Indium-haltige Präkursoren" bezeichnet) umgesetzt werden können, die dann unmittelbar in MOCVD-Prozessen eingesetzt werden können. Dabei ist es vorteilhaft, solche Präkursor-Vorstufen bereitzustellen, beziehungsweise Präkursoren über solche Präkursor-Vorstufen herzustellen, die selbst mit hoher Selektivität und Ausbeute erhältlich sind. Zudem kann es sehr vorteilhaft sein, Präkursor-Vorstufen bereitzustellen, die einfach und mit hoher Reinheit herstellbar und gegebenenfalls isolierbar und ausreichend lagerstabil sind, um eine bedarfsgerechte und möglichst schnelle Herstellung von hochreinen Präkursoren für MOCVD- Prozesse zu ermöglichen. Die MOCVD- Prozesse werden insbesondere bei der Herstellung von Halbleiterschichten für optoelektronische Anwendungen wie Solarzellen oder LEDs, aber auch zur Herstellung von dünnen Schichten in anderen Anwendungsbereichen eingesetzt, was üblicherweise höchste Reinheit des jeweils verwendeten Präkursors, sowie die Abwesenheit beziehungsweise das Vorhandensein nur sehr geringer Anteile an insbesondere sauerstoffhaltigen Verunreinigungen erfordert.

So sind verschiedene Verfahren zur Herstellung beispielsweise von Indiumhaltigen, Gallium-haltigen oder auch Aluminium-haltigen Präkursoren oder entsprechenden Präkursor-Vorstufen bekannt. Die jeweiligen Verfahrensbedingungen sind allerdings nicht zwingend beziehungsweise nicht unverändert zwischen den Elementen übertragbar. Es ist zu berücksichtigen, dass die Elemente Aluminium, Gallium und Indium bereits ein unterschiedliches chemisches Verhalten zeigen, woraus sich regelmäßig der Bedarf einer jeweils angepassten, besonderen Verfahrensführung bei Herstellung jeweiliger Präkursoren ergibt.

Im Stand der Technik bekannte Verfahren zur Herstellung von Indium-haltigen Präkursoren beziehungsweise Präkursor-Vorstufen stoßen oft auf erhebliche Schwierigkeiten, wenn es um die Herstellung in der für übliche Verwendungen erforderlichen Reinheit und Menge, insbesondere auch zu vertretbaren Kosten, geht. So können die elektrischen Eigenschaften der aus Indium-haltigen Präkursoren über MOCVD hergestellten Halbleiterschichten durch Verunreinigungen in den Präkursoren oder Präkursor-Vorstufen erheblich nachteilig beeinträchtigt werden. Zahlreiche Herstellungsverfahren sind zudem sehr zeitaufwändig. Auch werden häufig nur geringe Ausbeuten erzielt und die Reaktionsschritte sind häufig durch eine verminderte Selektivität gekennzeichnet. Auch aufgrund der Verwendung organischer Lösungsmittel bei bekannten Herstellungsverfahren zur Herstellung von Indium-haltigen Präkursoren oder Präkursor-Vorstufen sind die Verfahren zumeist kostenintensiv, wenig umweltfreundlich und können mit Lösungsmittelresten in den Zwischenprodukten und den Endprodukten einhergehen, die wiederum deren Verwendung erheblich einschränken oder eine kostenintensive und aufwändige Aufreinigung erforderlich machen.

DE 37 42 525 A1 betrifft ein Verfahren zur Herstellung von Metallalkylen wie Trimethylindium, wobei eine Herstellung ausgehend von Lithiumtetramethylindat als Präkursor-Vorstufe durch Umsetzung mit Indiumtrichlorid beschrieben ist, in einem organischen Lösungsmittel. Es wird ein Gemisch erhalten, das Trimethylindium umfasst und das nachfolgend noch isoliert und gereinigt werden muss. Die Ausbeute ist selbst nach Aufreinigung mit lediglich 82% des theoretischen Wertes angegeben. Auch ist die Herstellung durch eine relativ hohe Verfahrensdauer von mehr als 24 Stunden gekennzeichnet.

EP 0 372 138 A1 beschreibt ein Verfahren zur Herstellung organometallischer Verbindungen, nach dem auch Trialkylindium-Verbindungen erhältlich sind, über eine nichtflüchtige Präkursor-Vorstufe, die beispielsweise Lithiumtetramethylindat sein kann. Die Herstellung von Lithiumtetramethylindat aus Indiumtrichlorid findet in Diethylether unter Zusatz von Methyllithium statt, was das Verfahren insgesamt sehr kostenintensiv gestaltet. Das Lithiumtetramethylindat wird mit Indiumtrichlorid zu Trimethylindium umgesetzt, welches nachfolgend noch aufgereinigt werden muss. Angaben zur tatsächlichen Ausbeute finden sich nicht.

Außerdem ist das beschriebene Verfahren sehr aufwändig, unter anderem infolge zahlreicher Isolierungs- und Aufreinigungsschritte.

Gynane et. al. beschreiben die Umsetzung von Indium mit Alkylbromiden und Alkyliodiden zu Sesquihalogeniden (Gynane, M. J. S, Waterworth, L. G. und Worrall, I. J., J. Organometal. Chem., 40, 1972). Auch in einer weiteren Veröffentlichung ist die Umsetzung von Indiummonobromid oder Indiummonoiodid mit Alkyliodiden oder Alkylbromiden zu Alkylindiumdihalogeniden beschrieben, wobei sehr lange Reaktionszeiten erforderlich sind (Gynane, M. J. S, Waterworth, L. G. und Worrall, I. J., J. Organometal. Chem., 43, 1972).

US 5,663,390 betrifft die Herstellung von Alkylmetallchloriden durch Umsetzung eines Alkylchlorids mit elementarem Metall in Gegenwart von H₂ als Reaktionsbeschleuniger. Letzteres ist jedoch nachteilig, insbesondere ist das beschriebene Verfahren sehr aufwändig und die Umsetzung erfolgt nur unvollständig. Die Reaktion ist insgesamt sehr aufwändig und kostenintensiv und eignet sich daher nicht für den industriellen Maßstab.

### Aufgabe

Es ist eine Aufgabe der vorliegenden Erfindung ein Verfahren bereitzustellen, das eine bedarfsgerechte und kostengünstige Herstellung von geeigneten Präkursor-Vorstufen für Indium-haltige Präkursoren ermöglicht bei einfacher und schneller Prozessführung. Auch soll das Verfahren eine Herstellung solcher Verbindungen mit hoher Ausbeute und hoher Reinheit ermöglichen. Die Präkursor-Vorstufen sollen ferner einfach isolierbar und ausreichend lagerstabil sein.

Weiterhin sollen aus der Vorstufe erhältliche Indium-haltige Präkursoren möglichst frei von Sauerstoffverunreinigungen und in hoher Ausbeute und mit hoher Selektivität und Reinheit ausgehend von der Vorstufe erhältlich sein. Die erhältlichen Indium-haltigen Präkursoren sollen hierdurch besonders für MOCVD-Prozesse geeignet sein, was für die Herstellung von Halbleiterschichten jeweils hochreine Organoindiumverbindungen erfordert.

Das Verfahren soll zudem wenig umweltbelastend und ressourcenschonend durchführbar sein.

### Lösung

Die Aufgabe der vorliegenden Erfindung wird durch die Gegenstände der Patentansprüche gelöst.

Die Aufgabe wird insbesondere gelöst durch ein neues Verfahren zur Herstellung von Alkylindiumsesquichlorid (Verbindung (A)) mit der allgemeinen Formel:

**R₃In₂Cl₃,**

wobei R ein niederer Alkylrest ist, also ein solcher mit 1 bis 4 Kohlenstoffatomen. Der Alkylrest kann verzweigt oder unverzweigt sein, bevorzugt unverzweigt. Geeignete Alkylreste sind daher Isopropyl, Cyclopropyl, Isobutyl, sec-Butyl, tert-Butyl, insbesondere aber Propyl, n-Butyl sowie Ethyl oder Methyl.

Die Struktur der Verbindung (A) ist noch nicht abschließend geklärt und kann statt der oben angegebenen Formel R₃In₂Cl₃ auch als Gemisch von R₂InCl und RInCl₂ aufgefasst werden. Es ist auch möglich, dass diese Verbindungen miteinander und/oder mit R₃In₂Cl₃ im Gleichgewicht stehen. Das Molverhältnis von R₂InCl und RInCl₂ zueinander liegt im Bereich von etwa 30:70 bis 60:40, oder von etwa 30:70 bis 50:50, oder von etwa 31:69 bis etwa 45:55 oder von etwa 32:68 bis etwa 42:58.

Das Verfahren ist aufgrund der verwendeten Ausgangssubstanzen und weiterer verwendeter Reagenzien kostengünstig und wenig umweltbelastend und ermöglicht die Herstellung von R₃In₂Cl₃ mit schneller Prozessführung und hoher Ausbeute, sowie mit hoher Reinheit. Organische Lösemittel werden nicht eingesetzt.

Weiterhin von Vorteil ist, dass Verbindung (A) einfach isolierbar sowie ausreichend lagerstabil ist. Andererseits ist Verbindung (A) aber auch ohne Isolierung weiteren Umsetzungsschritten zugänglich, so dass die Möglichkeit der Entwicklung kostengünstiger Mehrstufenreaktionen ohne aufwändige Zwischenisolierung besteht (so genannte Ein-Topf-Reaktion).

Das erfindungsgemäße Verfahren eignet sich besonders zur Herstellung von Methylindiumsesquichlorid (Me₃In₂Cl₃) und Ethylindiumsesquichlorid (Et₃In₂Cl₃), bzw. Mischungen aus Me₂InCl/MeInCl₂ und Et₂InCl/EtInCl₂ (zum Teil auch in nicht stöchiometrischen Verhältnissen), ganz besonders für die Herstellung von Me₃In₂Cl₃. R ist also vorzugsweise ausgewählt aus Ethyl und Methyl, ganz besonders bevorzugt ist R Methyl. Methyl und Ethyl werden im Folgenden mit Me für Methyl und Et für Ethyl abgekürzt.

Erfindungsgemäß wird also zunächst ein neues Verfahren zur Herstellung von R₃In₂Cl₃, also der Verbindung (A), als Präkursor-Vorstufe bereitgestellt. An das erfindungsgemäße Verfahren können sich weitere Reaktionsschritte anschließen, so dass erfindungsgemäß auch Indium-haltige Präkursoren für MOCVD-Prozesse kostengünstig und mit schneller Prozessführung sowie in hoher Ausbeute und Reinheit erhältlich sind. Das erfindungsgemäße Verfahren umfasst also die Herstellung von Verbindung (A). In Ausführungsformen können sich an das erfindungsgemäße Verfahren zusätzliche Reaktionsschritte zur Herstellung von Indium-haltigen Präkursoren anschließen.

Die indiumhaltigen Präkursoren sind vorzugsweise ausgewählt aus Verbindungen der allgemeinen Formel R₃In (also Verbindung (B)) und R₂InR' (also Verbindung (C)). Bedingt durch die Verfahrensführung stimmt R erfindungsgemäß in Verbindung (A), (B) und (C) überein, R' kann hiervon abweichend sein wie weiter unten ausgeführt.

Dabei sind Indium-haltige Präkursoren der allgemeinen Formel:

**R₃In,**

erfindungsgemäß solche, in denen R ein niederer Alkylrest mit 1 bis 4 Kohlenstoffatomen ist. Der Alkylrest kann verzweigt oder unverzweigt, bevorzugt unverzweigt sein. R ist insbesondere ausgewählt aus Ethyl und Methyl, insbesondere ist R Methyl. Als Verbindungen der Formel R₃In gut geeignet sind beispielsweise Trimethylindium oder Triethylindium.

Indium-haltige Präkursoren der allgemeinen Formel:

**R₂InR',**

sind erfindungsgemäß solche, in denen R ein niederer Alkylrest mit 1 bis 4 Kohlenstoffatomen ist, der verzweigt oder unverzweigt sein kann, und wobei R' ein nukleophiler Rest ist, der von R verschieden ist. R' ist vorzugsweise ausgewählt aus verzweigtem oder unverzweigtem und substituiertem oder unsubstituiertem Alkyl, verzweigtem oder unverzweigtem und substituiertem oder unsubstituiertem Aryl. R' kann insbesondere mit verzweigten oder unverzweigten Alkyl- oder Alkoxygruppen, oder mit Aminresten substituiertes Phenyl oder Alkyl sein. Insbesondere handelt es bei sich bei R' um Alkyl- oder Arylreste mit 1 bis 6 Kohlenstoffatomen, welche substituiert sind mit verzweigten oder unverzweigten Alkyl- oder Alkoxygruppen, wie Methyl, Ethyl, n-Butyl, Propyl, sec-Butyl, Tert.-Butyl, Isobutyl, Isopropyl, Cyclopropyl, Cyclobutyl, Methoxy, Ethoxy, n-Butoxy, Propoxy, sec-Butoxy, Tert.-Butoxy, Isobutoxy, Isopropoxy, Cyclopropoxy, Cyclobutoxy, oder aber Alkyl- oder Arylreste mit 1 bis 6 Kohlenstoffatomen, die (insbesondere einfach, oder zweifach) substituiert sind mit Aminresten, welche selbst mit Resten des Typs verzweigten oder unverzweigten Alkylgruppen, wie Methyl, Ethyl, n-Butyl, Propyl, sec-Butyl, Tert.-Butyl, Isobutyl, Isopropyl, Cyclopropyl, Cyclobutyl, substituiert sind.

Der nukleophile Rest R' kann beispielsweise Phenyl, Toluyl, Mesityl, Dimethylamino, Diethylamino, Dibutylamino, Diisopropylamino, Et₂N-(CH₂)₃, Me₂N-(CH₂)₃, Me₂N-(CH₂)₂, Me₂N-CH₂, Et₂N-(CH₂)₂, Et₂N-CH₂, Isopropyl, Cyclopropyl, Isobutyl, sec-Butyl, tert-Butyl, Cyclopropyl, insbesondere aber Me₂N-(CH₂)₃-, Propyl, n-Butyl sowie Ethyl oder Methyl sein. Sofern die Definitionen von R und R' gleiche Reste umfassen, so müssen sich in Verbindung (C) R und R' voneinander unterscheiden. Ist also z.B. R gleich Methyl, dann muss R' von Methyl verschieden sein.

In einer Ausführungsform der Erfindung ist R Methyl und R' ist ein Me₂N-(CH₂)₃-Rest. In einer weiteren Ausführungsform der Erfindung ist R Methyl und R' Ethyl. In einer weiteren Ausführungsform der Erfindung ist R Ethyl und R' Methyl. Daher ergeben sich die Verbindungen Me₂InEt, Et₂InMe sowie Me₂In-(CH₂)₃-N-Me₂ bzw. (CH₃)₂In-(CH₂)₃-N-(CH₃)₂. In dieser Ausführungsform schließen sich also weitere Reaktionsschritte an das erfindungsgemäße Verfahren an, so dass auch Indium-haltige Präkursoren, vorzugsweise R₃In (also Verbindung (B)) oder R₂InR' (also Verbindung (C)), kostengünstig und bedarfsgerecht sowie mit schneller Prozessführung erhalten werden können.

Die aus Verbindung (A) bevorzugt erhältlichen Indium-haltigen Präkursoren (B) und (C) sind aufgrund der besonders hohen Reinheit besonders geeignet für die Herstellung von in der Halbleiterindustrie verwendeten und im Rahmen von MOCVD-Prozessen hergestellten Indium-haltigen Schichten, wie zum Beispiel InP-, InAlP- oder AlInGaP-Schichten.

### 1. Verfahren zur Herstellung von Verbindung (A)

Das Verfahren zur Herstellung einer Verbindung (A) der allgemeinen Formel **R₃In₂Cl₃** umfasst die Reaktionsschritte
a1) Reaktion von Indium mit einem Alkyldonor zur Bildung der Verbindung (A), wobei der Alkyldonor ein Alkylchlorid (RCl) und wobei R ein verzweigter oder unverzweigter Alkylrest mit 1 bis 4 Kohlenstoffatomen ist;
a2) und optional Isolierung von Verbindung (A) vom Reaktionsgemisch; wobei in Schritt a1) als Reaktionsmedium eine Verbindung der Formel R₃In₂Cl₃ eingesetzt wird und das Verhältnis Indium zum Reaktionsmedium 0,5:10 bis 2:1 oder 1:1,5 bis 1,5:1 (bezogen auf das Gewicht) beträgt. Ein gesonderter Aktivator oder ein organisches Lösemittel werden nicht verwendet.

### Reaktionsschritt a1):

Das Indium kann in einer Reinheit von bevorzugt mindestens 5N oder höher (entsprechend >99,999% metallische Reinheit bezogen auf Indium) eingesetzt, jedoch auch als 4N (=99,99%ige metallische Reinheit) Indium eingesetzt werden. Im Prinzip ist jedoch aber auch eine Verwendung von Indium niedrigerer Reinheit möglich. Die Partikelgröße kann in weiten Grenzen variiert werden, da das Indium bei Reaktionstemperatur geschmolzen vorliegt (Schmelzpunkt von Indium ca. 156 °C). Zur einfacheren Abmessung der benötigten Mengen und Befüllung des Reaktors können beispielsweise Granalien mit einer Partikelgröße von 1 mm bis 10 mm, insbesondere von 4 mm bis 6 mm verwendet werden (z.B. so genannte Indium-Shots von ca. 0,5 cm Größe), aber auch Pulver oder gar Barren können eingesetzt werden.
Der Alkyldonor ist eine Verbindung, die eine Alkylgruppe umfasst, wobei es sich bei dem Alkyldonor um ein Alkylhalogenid handelt, wobei Alkyl wie oben definiert ist und als Halogenid Chlor, Brom oder Iod verwendet werden können, insbesondere Chlor. Bei dem Alkyldonor kann es sich daher insbesondere um ein Alkylchlorid handeln, das also neben der Alkylgruppe auch wenigstens ein Chloratom umfasst. Insbesondere handelt es sich bei dem Alkyldonor um ein Alkylhalogenid, (insbesondere ein Alkylchlorid), wobei Alkyl wie oben (siehe Definition von R) definiert ist, besonders bevorzugt ist Alkyl Methyl oder Ethyl, insbesondere Methyl. In bevorzugten Ausführungsformen ist also der Alkyldonor Methylchlorid (Chlormethan) oder Ethylchlorid (Chlorethan), besonders bevorzugt Methylchlorid.

Bevorzugt werden für diese Reaktion 1,5 bis 5 Äquivalente Alkyldonor pro Äquivalent Indium eingesetzt, oder 1,65 bis 4,5 Äquivalente oder 1,65 bis 3 oder 1,65 bis 2,9 Äquivalenten Alkyldonor pro Äquivalent Indium verwendet. Wird der Alkyldonor in einem zu geringen Anteil im Verhältnis zum Indium eingesetzt, so besteht die Gefahr einer nicht vollständigen Umsetzung und einer verringerten Ausbeute an Verbindung (A). Werden zu hohe Mengen an Alkyldonor im Verhältnis zum Indium eingesetzt, so wird das Verfahren insgesamt zu teuer und zu unwirtschaftlich und ist im industriellen Maßstab nicht mehr wirtschaftlich durchführbar, was unerwünscht ist.

Bevorzugt werden das Indium und der Alkyldonor dem Reaktionsgefäß nacheinander zugesetzt. Besonders bevorzugt werden zunächst Indium und das Reaktionsmedium vorgelegt und anschließend der Alkyldonor zugesetzt. Dies führte überraschend zu hohen Ausbeuten und vereinfacht zudem den apparativen Aufwand. So können Indium und das Reaktionsmedium, Verbindung (A), in den Reaktor einfach eingewogen werden. Anschließend kann eine kontrollierte Zugabe des Alkyldonors erfolgen. Das Reaktionsmedium schmilzt beim Erwärmen auf die Reaktionstemperatur und bildet eine durchsichtige Schmelze, in welcher das ebenfalls flüssige Indium emulgiert oder als zweite flüssige Phase vorliegen kann.

Die Zugabe des Alkyldonors zum Indium erfolgt bevorzugt dadurch, dass der Alkyldonor, der bevorzugt bei Normbedingungen gasförmig vorliegt (Siedepunkt von MeCl liegt bei -24°C, von EtCl bei 12°C), durch kontrolliertes kontinuierliches Einleiten in flüssigem oder gasförmigem Zustand der Reaktion zugeführt wird. Im Reaktor bzw. unter Reaktionsbedingungen liegt der Alkyldonor gasförmig vor.

Beim Einleiten wird während des Reaktionsverlaufes vorzugsweise immer soviel Alkyldonor nachgeliefert, wie verbraucht wurde, so dass der Reaktions(über)druck konstant gehalten wird. Die Steuerung erfolgt zum Beispiel automatisch über ein mit einem Dosierventil gekoppelten Drucksensor.

Optional kann der Alkyldonor durch Einkondensieren zugegeben werden.

Bevorzugt wird der Alkyldonor flüssig in den Reaktor geleitet. Es wird im Regelfall nicht von Anfang an die gesamte benötigte Menge an Alkyldonor zugegeben, wie dies beim Einkondensieren der Fall ist, sondern permanent Alkyldonor zur Mischung aus Indium und dem Reaktionsmedium, Verbindung (A), dosiert, bis die Umsetzung vollständig ist.

Die Dosierung des flüssigen Alkyldonors kann dann unter Druck direkt aus dem Flüssiggas-Tank erfolgen. Im Reaktor verdampft der Alkyldonor durch die herrschenden Reaktionsbedingungen sofort, so dass die Umsetzung im Reaktor mit gasförmigem Alkyldonor erfolgt.

Die Zugabe des Alkyldonors durch Einleiten oder Aufdrücken beginnt im Regelfall bei Temperaturen oberhalb von 20 °C. In einer Ausführungsform liegt das Indium, bzw. die Mischung aus Indium und dem Reaktionsmedium, Verbindung (A), im Reaktor bei Beginn der Zugabe des Alkyldonors flüssig vor. Da reines Indium einen Schmelzpunkt von 156,6 °C aufweist, findet die Zugabe dann bei einer Temperatur von 156°C oder mehr statt. Das bedeutet, dass in dieser Ausführungsform Indium und Reaktionsmedium im Reaktor vorgelegt und erhitzt werden, bis die Mischung flüssig ist und dann begonnen wird, Alkyldonor einzuleiten.
In einer anderen Ausführungsform wird der Alkyldonor, wie beispielsweise das Methylchlorid, bei Raumtemperatur in den Reaktor mit der vorgelegten Indium-Reaktionsmedium-Mischung geleitet und dann auf die gewünschte Reaktionstemperatur erhitzt und die Einleitung von Alkyldonor währenddessen fortgesetzt. Nach Beginn der Zugabe des Alkyldonors wird das Reaktionsgemisch aufgeheizt. Eine Temperatur von 250°C, vorzugsweise von 235°C wird dabei bevorzugt nicht überschritten, um Nebenreaktionen zu vermindern, wie auch aus wirtschaftlichen Erwägungen. Bei Reaktionstemperaturen oberhalb von 235 °C kann eine langsame thermische Zersetzung beobachtet werden, bei der vermutlich Indium als Zersetzungsprodukt entsteht. Es wird bevorzugt auf Temperaturen von wenigstens 156°C, weiter bevorzugt wenigstens 170°C und besonders bevorzugt wenigstens 180°C erhitzt, um eine besonders vollständige Umsetzung zu Verbindung (A) zu ermöglichen. Die Reaktionstemperaturen liegen also im Bereich von etwa 156°C bis etwa 250°C, oder von 160°C bis 220°C, oder von 180°C bis 200°C, unabhängig davon, auf welche Art und Weise die Zugabe des Alkyldonors erfolgt ist.
Reaktionsschritt a1) kann unter Inertgas wie Argon oder Stickstoff durchgeführt werden. Es ist jedoch möglich, die Reaktion ohne zusätzliches Inertgas in einer reinen Atmosphäre aus Alkyldonor, wie beispielsweise Methylchlorid oder Ethylchlorid, durchzuführen, was Vorteile hat.
Im Allgemeinen erfolgt die Zugabe des Alkyldonors bei einem vorgegebenen konstanten Druck, beispielsweise bei einem absoluten Druck von 0,11MPa bis 0,7MPa ,oder 0,2MPa bis 0,55MPa oder 0,25MPa bis 0,5MPa (Überdruck von 0,01MPa bis 0,6 MPa, oder 0,1MPa bis 0,45MPa, oder bei 0,15MPa bis 0,4 MPa). Hierbei kann so vorgegangen werden, dass ein gewünschter Überdruck an Alkyldonor (also z.B Ethylchlorid oder Methylchlorid), wie beispielsweise 0,35MPa vorgegeben wird. Über einen Durchflussregler wird immer so viel an Alkyldonor (also z.B. Ethylchlorid oder Methylchlorid), in den Reaktor nachgeliefert wie verbraucht wird, so dass der Druck im Reaktor in etwa konstant, also beispielsweise bei 0,45MPa (bzw. der Überdruck bei 0,35MPa bleibt. Wenn kein Alkyldonor (also z.B. Ethylchlorid oder Methylchlorid), mehr verbraucht wird, so ist die Reaktion beendet.
Da bei der Reaktion gasförmige Nebenprodukte wie Ethen oder Methan entstehen können, hat es sich bewährt, gelegentlich den Überdruck im Reaktor abzulassen und diesen neu mit Alkyldonor zu beschicken. Dies kann insbesondere dann vorteilhaft sein, wenn zwar die Gegenwart von Indium, aber kein Verbrauch von Alkyldonor beobachtet werden kann, was aber zwangsläufig der Fall ist, wenn eine Reaktion von Indium mit Alkyldonor stattfindet.
Ein besonderer Vorteil bei der Verwendung des Produktes Alkylindiumsesquichlorid selbst als Reaktionsmedium liegt darin, dass dann in einer einfachen Reaktionsführung ein Teil des Reaktionsproduktes im Reaktor zur Verwendung im nächsten Batch zurückgelassen wird und neben Indium und dem Alkyldonor keine zusätzlichen Chemikalien benötigt werden, so daß die Herstellung von Verbindung (A) semikontinuierlich betrieben werden kann. Das Reaktionsmedium wird vorzugsweise in einer solchen Menge eingesetzt, dass das Molverhältnis von Indium zu Reaktionsmedium bei wenigstens 1:1 liegt. Bewährt haben sich Molverhältnisse von Indium zum Reaktionsmedium, Verbindung (A), von bis zu 8:1, insbesondere von <4:1, also beispielsweise 3,8:1 oder 3,5:1, so dass die Molverhältnisse von Indium zum Reaktionsmedium im Bereich von 1:1 bis 8:1, insbesondere 1:1 bis <4:1, oder 1:1 bis 3,8:1, oder 1:1 bis 3,5:1 betragen.
Die Mengenverhältnisse von Indium zum Reaktionsmedium, Verbindung (A) der Formel R₃In₂Cl₃, liegen im Bereich von etwa 0,5:10 bis 2:1 oder 1:1,5 bis 1,5:1. Die Reaktionszeit des Schritts a1) beträgt vorzugsweise zwischen 10 min und 30 Stunden. Eine Reaktionszeit von mindestens 15 min, weiter bevorzugt von mindestens 30 min, und noch weiter bevorzugt von mindestens 40 min hat sich als besonders vorteilhaft in Bezug auf die Ausbeute an Verbindung (A) erwiesen. Die Reaktionszeit liegt besonders bevorzugt bei höchstens 28 Stunden, weiter bevorzugt bei höchstens 12 Stunden. Zu hohe Reaktionszeiten führen zu einem sehr kostenintensiven und unwirtschaftlichen Verfahren.

In allen Ausführungsformen des erfindungsgemäßen Verfahrens läuft im Reaktionsschritt a1) schematisch folgende Reaktion ab:

2 In + 3 RCl → **R₃In₂Cl₃**

### Reaktionsschritt a2):

Die erfindungsgemäß optionale Isolierung der Verbindung (A) umfasst vorzugsweise das Abtrennen flüchtiger Bestandteile vom im Reaktionsgefäß befindlichen Reaktionsgemisch und/oder Verfahrensschritte ausgewählt aus der Sublimation der Verbindung (A) vom Reaktionsgemisch und dem mechanischen Entfernen von Verbindung (A) aus dem Reaktionsgefäß. Als einfache Variante des mechanischen Entfernens kann das Ablassen des Produktes im flüssigen Zustand angesehen werden.

Der Begriff "Isolierung" beziehungsweise "Isolieren" umfasst dabei das Abtrennen des jeweiligen gewünschten Reaktionsproduktes vom im Reaktionsgefäß befindlichen Reaktionsgemisch durch Entfernen des Reaktionsproduktes aus dem Reaktionsgefäß oder das Entfernen sonstiger Verbindungen neben dem Reaktionsprodukt vom Reaktionsgemisch derart, dass nur das Reaktionsprodukt im Reaktionsgefäß zurückbleibt.

In einer Ausführungsform wird Verbindung (A) durch Entnahme aus dem Reaktionsgefäß isoliert, was mit einem Hilfsmittel wie Löffel, Spatel, Schaber etc. durchgeführt werden kann. Das Ablassen im flüssigen Zustand ist eine sehr einfache Möglichkeit, was etwa durch Ablassen durch ein entsprechendes Ventil oder durch Überdrücken der Flüssigkeit in einen Behälter bewirkt werden kann. Es hat sich als besonders vorteilhaft für die Reinheit der Verbindung (A) erwiesen, zunächst flüchtige Nebenbestandteile vom im Reaktionsgefäß befindlichen Gemisch, insbesondere noch vorhandenen Alkyldonor wie RCI, also z.B. Methylchlorid oder Ethylchlorid, abzutrennen und erst nachfolgend die Verbindung (A) aus dem Reaktionsgefäß zu entnehmen. Das Abtrennen flüchtiger Nebenbestandteile, insbesondere noch vorhandener Alkyldonor RCl, erfolgt vorzugsweise durch Anlegen von Vakuum. Dabei hat sich ein Vakuum mit einem Restgasdruck unter 1 hPa, weiter bevorzugt unter 0,1 hPa bewährt.

Optional können sich an das Isolieren der Verbindung (A) weitere Reinigungsschritte der Verbindung (A) anschließen, wobei dem Fachmann geeignete Verfahren zu Aufreinigung chemischer Stoffe bekannt sind. Erfindungsgemäß bevorzugt wird durch die besondere Verfahrensführung und die erfindungsgemäßen Edukte aber auch ohne weitere Reinigungsschritte bereits eine ausreichend hohe Reinheit der Verbindung (A) erzielt. Erfindungsgemäß bevorzugt sind daher neben der bevorzugten Isolierung von Verbindung (A), also der Abtrennung flüchtiger Nebenbestandteile und der Entnahme von Verbindung (A) aus dem Reaktionsgefäß, keine weiteren Reinigungsschritte von Verbindung (A) mehr erforderlich.

Es erfolgt während der Isolierung von Verbindung (A) nur eine unvollständige Entnahme des Reaktionsproduktes aus dem Reaktionsgefäß. Die im Reaktionsgefäß zurückbleibende Menge an Verbindung (A) wird nach Zugabe von weiterem Indium und erneuter Zugabe von Alkyldonor als Reaktionsmedium für die weitere Herstellung von Verbindung (A) im nächsten Batch genutzt. Hierbei wird im Allgemeinen die auf Basis der eingesetzten Menge an Indium berechnete Menge an Reaktionsprodukt, Verbindung (A), entnommen.

In alternativen Ausführungsformen erfolgt keine Isolierung von Verbindung (A) aus dem Reaktionsgemisch. In solchen Ausführungsformen wird das Reaktionsgemisch umfassend Verbindung (A) direkt zur Herstellung von Indium-haltigen Präkursoren, insbesondere Verbindung (B) oder (C), verwendet. In diesen Ausführungsformen schließen sich also zusätzliche Reaktionsschritte zur Herstellung von vorzugsweise Verbindung (B) oder (C) unmittelbar an Reaktionsschritt a1) an, ohne eine Isolierung der Verbindung (A) vom Reaktionsgemisch, also ohne den Reaktionsschritt a2). Dies ermöglicht eine noch schnellere Prozessführung bei der Herstellung Indium-haltiger Präkursoren.

Das erfindungsgemäße Verfahren ermöglicht die Herstellung von Verbindung (A) mit einer Ausbeute von vorzugsweise wenigstens 70%, weiter bevorzugt wenigstens 75%, noch weiter bevorzugt wenigstens 79% und ganz besonders bevorzugt von wenigstens 85% sowie noch weiter bevorzugt über 90% und noch mehr bevorzugt über 95%. Erfindungsgemäße Angaben zur Ausbeute sind stets auf die theoretische Ausbeute bezogen.

Die Reinheit der erfindungsgemäß hergestellten Verbindung (A) beträgt vorzugsweise wenigstens 95%, bevorzugt wenigstens 98% und besonders bevorzugt mehr als 99%. Es sind also vorzugsweise nicht mehr als 5%, bevorzugt nicht mehr als 2% und weiter bevorzugt unter 1% Verunreinigungen, also unerwünschte Substanzen, in der hergestellten Verbindung (A) enthalten.

Eine bevorzugte Verbindung (A), die nach dem erfindungsgemäßen Verfahren erhältlich ist, ist ausgewählt aus Methylindiumsesquichlorid (Me₃In₂Cl₃), das wie oben beschrieben auch als Gemisch aus Me₂InCl und MeInCl₂ aufgefasst werden kann, und Ethylindiumsesquichlorid (Et₃In₂Cl₃), das wie oben beschrieben auch als Gemisch aus Et₂InCl und EtInCl₂ aufgefasst werden kann. Ganz besonders eignet sich das erfindungsgemäße Verfahren zur Herstellung von Me₃In₂Cl₃.

### 2. Weiterverarbeitung der Verbindung (A) zu Indium-haltigen Präkursoren

Die nach dem oben beschriebenen Verfahren erhaltene Verbindung (A) kann optional weiterverarbeitet werden zu Indium-haltigen Präkursoren, erfindungsgemäß bevorzugt ausgewählt aus den Verbindungen (B) und (C). Erfindungsgemäß ist daher auch die Verwendung der nach dem erfindungsgemäßen Verfahren hergestellten Verbindung (A) zur Herstellung von Indium-haltigen Präkursoren, bevorzugt ausgewählt aus Verbindung (B) und (C), für MOCVD- oder MOVPE-Prozesse.

Besonders geeignet ist die erfindungsgemäß hergestellte Verbindung (A) zur Herstellung von Indium-haltigen Präkursoren der allgemeinen Formel:

**R₃In,**

also Verbindung (B), wobei R ein niederer Alkylrest mit 1 bis 4 Kohlenstoffatomen ist. Der Alkylrest kann verzweigt oder unverzweigt sein, bevorzugt unverzweigt. R ist vorzugsweise ausgewählt aus Ethyl und Methyl, insbesondere ist R Methyl. R ist verfahrensbedingt durch den Rest R in Verbindung (A) bestimmt, so dass R in Verbindung (A) dem Rest R in Verbindung (B) entspricht.

Eine Ausführungsform betrifft also ein Verfahren zur Herstellung einer Verbindung (B) der allgemeinen Formel R₃In umfassend die Reaktionsschritte
- Bereitstellen der Verbindung (A) wie oben beschrieben, bzw. nach einem der Ansprüche 1 bis 12;
- Reaktion der Verbindung (A) mit Alkylierungsmittel. Das Alkylierungsmittel kann aus R-MgX, R-Li und R₃Al, wobei R wie oben definiert ist, ausgewählt sein.

Diese Reaktion kann in Gegenwart von organischen Lösungsmitteln wie Ethern, aliphatischen oder aromatischen Kohlenwasserstoffen sowie deren Kombinationen durchgeführt werden. Gut geeignet sind insbesondere Dialkylether. Ganz besonders bevorzugt wird ein Lösungsmittel ausgewählt aus Diethylether, Methyltetrahydrofuran, längerkettigen Ethern und Mischungen daraus im Reaktionsschritt verwendet, wobei längerkettige Ether solche sind, die Alkylgruppen mit mehr als 2 C-Atomen umfassen, insbesondere Diethylether oder Di-n-butylether, weiter bevorzugt Diethylether. Als aliphatische oder aromatische Kohlenwasserstoffe können Alkane, einschließlich Cycloalkane und Aromaten, verwendet werden, wie *n*-Pentan, *n*-Heptan, *n*-Hexan oder Benzol. Als organische Lösungsmittel für diesen Schritt haben sich auch insbesondere hochsiedende Alkane und Aromate als geeignet erwiesen, wie zum Beispiel *n*-Decan, *n-*Nonadecan, Squalan und, Naphthalin. Anschließend können optional weitere Reinigungsschritte zur Herstellung von hochreiner Verbindung (B) durchgeführt werden.

Alternativ kann die erfindungsgemäß hergestellte Verbindung (A) zur Herstellung Indium-haltiger Präkursoren der allgemeinen Formel:

**R₂InR',**

also Verbindung (C), verwendet werden, wobei R ein niederer Alkylrest mit 1 bis 4 Kohlenstoffatomen ist, der verzweigt oder unverzweigt sein kann, und wobei R' ein von R verschiedener nukleophiler Rest ist. R' ist vorzugsweise ausgewählt aus verzweigtem oder unverzweigtem und substituiertem oder unsubstituiertem Alkyl, verzweigtem oder unverzweigtem und substituiertem oder unsubstituiertem Aryl.

R' kann insbesondere mit verzweigten oder unverzweigten Alkyl- oder Alkoxygruppen, oder mit Aminresten substituiertes Phenyl oder Alkyl sein. Insbesondere handelt es bei sich bei R' um Alkyl- oder Arylreste mit 1 bis 6 Kohlenstoffatomen, welche substituiert sind mit verzweigten oder unverzweigten Alkyl- oder Alkoxygruppen, wie Methyl, Ethyl, n-Butyl, Propyl, sec-Butyl, Tert.-Butyl, Isobutyl, Isopropyl, Cyclopropyl, Cyclobutyl, Methoxy, Ethoxy, n-Butoxy, Propoxy, sec-Butoxy, Tert.-Butoxy, Isobutoxy, Isopropoxy, Cyclopropoxy, Cyclobutoxy, oder aber Alkyl- oder Arylreste mit 1 bis 6 Kohlenstoffatomen, die (insbesondere einfach, oder zweifach) substituiert sind mit Aminresten, welche selbst mit Resten des Typs verzweigten oder unverzweigten Alkylgruppen, wie Methyl, Ethyl, n-Butyl, Propyl, sec-Butyl, Tert.-Butyl, Isobutyl, Isopropyl, Cyclopropyl, Cyclobutyl, substituiert sind.

Der nukleophile Rest R' kann beispielsweise Phenyl, Toluyl, Mesityl, Dimethylamino, Diethylamino, Dibutylamino, Diisopropylamino, Et₂N-(CH₂)₃, Me₂N-(CH₂)₃, Me₂N-(CH₂)₂, Me₂N-CH₂, Et₂N-(CH₂)₂, Et₂N-CH₂, Isopropyl, Cyclopropyl, Isobutyl, sec-Butyl, tert-Butyl, Cyclopropyl, insbesondere aber Me₂N-(CH₂)₃, Propyl, n-Butyl sowie Ethyl oder Methyl sein. Sofern die Definitionen von R und R' gleiche Reste umfassen, so müssen sich in Verbindung (C) R und R' voneinander unterscheiden. Ist also R gleich Methyl, dann muss R' von Methyl verschieden sein.

In einer Ausführungsform der Erfindung ist R Methyl und R' ist ein Me₂N-(CH₂)₃-Rest. In einer weiteren Ausführungsform der Erfindung ist R Methyl und R' Ethyl. In einer weiteren Ausführungsform der Erfindung ist R Ethyl und R' Methyl. Daher ergeben sich die Verbindungen Me₂InEt, Et₂InMe sowie Me₂In-(CH₂)₃-N-Me₂ bzw. (CH₃)₂In-(CH₂)₃-N-(CH₃)₂.

R ist verfahrensbedingt durch den Rest R in Verbindung (A) bestimmt, so dass R in Verbindung (A) dem Rest R in Verbindung (C) entspricht.

### 2.1. Weiterverarbeitung der Verbindung (A) zu Verbindung (B)

In bevorzugten Ausführungsformen schließen sich an das Verfahren zur Herstellung der Verbindung (A) zusätzlich folgende weitere Reaktionsschritte an, wobei die Verbindung (B) erhältlich ist:
b1) Reaktion von Verbindung (A) mit einem Alkyllithium zur Bildung von Lithiumtetraalkylindat (LiInR₄), und Isolierung von LiInR₄ vom Reaktionsgemisch, und
b2) Reaktion des LiInR₄ mit einer Indiumchlorid-Komponente, wobei Verbindung (B) erhalten wird.

Reaktionsschritt b2) kann sich unmittelbar an Reaktionsschritt b1) anschließen. Alternativ kann Reaktionsschritt b2) auch zeitlich versetzt zu Reaktionsschritt b1) erfolgen.

### Reaktionsschritt b1):

Reaktionsschritt b1) umfasst die Reaktion von Verbindung (A) mit einem Alkyllithium zur Bildung von Lithiumtetraalkylindat, wobei das Lithiumtetraalkylindat folgender allgemeiner Formel genügt:

**LiInR₄**

wobei R wie oben definiert ist. R ist vorteilhaft Methyl oder Ethyl, insbesondere Methyl. R ist verfahrensbedingt durch den Rest R in Verbindung (A) bestimmt.

Der Begriff "Alkyllithium" umfasst solche Verbindungen, die wenigstens eine Alkylgruppe und Lithium umfassen. Das Alkyllithium weist erfindungsgemäß bevorzugt folgende allgemeine Formel auf:

**RLi**

wobei R wie oben definiert ist. Ganz besonders bevorzugt ist das Alkyllithium ausgewählt aus Ethyllithium (EtLi) und Methyllithium (MeLi), insbesondere ist das Alkyllithium Methyllithium.

Das Alkyllithium wird im Reaktionsschritt b1) als Alkylierungsmittel eingesetzt, nicht jedoch als Reduktionsmittel.

Reaktionsschritt b1) findet vorzugsweise in einem organischen Lösungsmittel statt. Als organische Lösungsmittel für Schritt b1) eignen sich insbesondere Dialkylether. Ganz besonders bevorzugt wird ein Lösungsmittel ausgewählt aus Diethylether, Diethoxymethan, Methyltetrahydrofuran, längerkettigen Ethern und Mischungen daraus im Reaktionsschritt b1) verwendet, wobei längerkettige Ether solche sind, die Alkylgruppen mit mehr als 2 C-Atomen umfassen. Noch mehr bevorzugt ist das Lösungsmittel Diethylether oder Di-*n*-butylether, weiter bevorzugt Diethylether.

Es hat sich als besonders vorteilhaft erwiesen, zwischen 4 und 5,3 Äquivalente Alkyllithium pro Äquivalent Verbindung (A) einzusetzen, besonders bevorzugt zwischen 4,8 und 5,3 Äquivalente und noch mehr bevorzugt zwischen 4,8 und 5,2 Äquivalente sowie ganz besonders bevorzugt etwa 5 Äquivalente.

In bevorzugten Ausführungsformen wird das Alkyllithium in dem organischen Lösungsmittel vorgelegt und Verbindung (A) anschließend zugesetzt, bevorzugt bei Temperaturen zwischen -10 und 10°C, weiter bevorzugt bei Temperaturen zwischen -5 und 5°C, weiter bevorzugt bei -2 bis 2°C und noch mehr bevorzugt bei 0 +/- 1°C. Die Reaktion findet vorzugsweise bei Temperaturen zwischen -30°C und dem Siedepunkt des organischen Lösungsmittels statt, weiter bevorzugt bei -5°C bis 35°C.

In alternativen Ausführungsformen wird Verbindung (A) in dem organischen Lösungsmittel vorgelegt und nachfolgend das Alkyllithium zugesetzt. Dabei wird das Alkyllithium als Mischung mit dem organischen Lösungsmittel bevorzugt zugetropft, besonders bevorzugt bei Temperaturen zwischen -10 und 10°C, weiter bevorzugt -5 und 5°C und noch weiter bevorzugt bei -2 bis 2°C.

Vorzugsweise wird nach Zugabe aller Reaktanden gerührt für bevorzugt wenigstens 10 min, weiter bevorzugt wenigstens 15 min. Die Reaktionszeit beträgt in der Regel nicht mehr als 48 Stunden, bevorzugt nicht mehr als 24 Stunden.

LiInR₄ wird isoliert vom Reaktionsgemisch. Dies erfolgt vorzugsweise durch Entfernen des Lösungsmittels und etwaiger Nebenprodukte, insbesondere LiCl, oder Rückstände der Reaktanden, vorzugsweise durch Abdestillieren flüchtiger Bestandteile und/oder Filtration des Reaktionsgemischs. Ein Isolieren des LiInR₄ durch Filtration zur Entfernung von LiCl und anschließende Entfernung des Lösungsmittels durch Destillation hat sich als besonders vorteilhaft erwiesen.

In einer bevorzugten Ausführungsform läuft im Reaktionsschritt b1) schematisch folgende Reaktion ab:

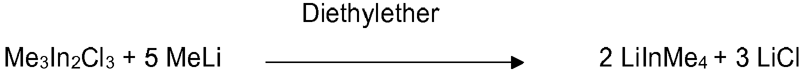

### Reaktionsschritt b2):

Aus LiInR₄ ist Verbindung (B) durch Reaktion von LiInR₄ mit einer Indiumchlorid-Komponente herstellbar.

Die "Indiumchlorid-Komponente" ist erfindungsgemäß eine Verbindung, die Indium und Chlorid umfasst. Der Begriff "Indiumchlorid-Komponente" umfasst insbesondere auch Verbindungen, die neben Indium und Chlorid auch wenigstens einen Alkylrest umfassen. Die Indiumchlorid-Komponente hat vorzugsweise folgende allgemeine Formel:

**RₐIn_{b}Cl_{c},**

wobei a eine Zahl ausgewählt aus 0, 1, 2 und 3 ist und b eine Zahl ausgewählt aus 1 und 2 ist und c eine Zahl ausgewählt aus 1, 2 und 3 ist, und wobei a + b + c = 4 oder ein Vielfaches von 4 sind, besonders bevorzugt ist die Summe aus a, b und c = 4 oder 8. R ist ein niederer Alkylrest mit 1 bis 4 Kohlenstoffatomen. Der Alkylrest kann verzweigt oder unverzweigt sein, bevorzugt unverzweigt. R ist vorzugsweise ausgewählt aus Ethyl und Methyl, insbesondere ist R Methyl.

Ganz besonders bevorzugt ist die Indiumchlorid-Komponente ausgewählt aus InCl₃, R₂InCl, R₃In₂Cl₃, RInCl₂ und Mischungen davon. Ganz besonders bevorzugte Indiumchlorid-Komponenten sind R₂InCl oder R₃In₂Cl₃, insbesondere Me₂InCl, Et₂InCl, Me₃In₂Cl₃ oder Et₃In₂Cl₃, weiter bevorzugt Me₂InCl oder Me₃In₂Cl₃. Bevorzugt wird Verbindung (A) als Indiumchlorid-Komponente eingesetzt, was das erfindungsgemäße Verfahren noch kostengünstiger gestaltet. In besonders bevorzugten Ausführungsformen ist die Indiumchlorid-Komponente daher R₃In₂Cl₃, also Verbindung (A). Die Indiumchlorid-Komponente wird vorteilhaft mit den oben beschriebenen Verfahrensschritten a1) und a2) erhalten.

Das Molverhältnis von Lithiumtetraalkylindat zu der Indiumchlorid-Komponente kann zwischen 1:1 bis 3:1 betragen, bevorzugt etwa 1:1, 2:1 oder 3:1. In Ausführungsformen, in denen die Indiumchlorid-Komponente R₂InCl ist, hat sich ein Molverhältnis von Lithiumtetraalkylindat zu der Indiumchlorid-Komponente von etwa 1:1 als besonders vorteilhaft erwiesen. In Ausführungsformen, in denen die Indiumchlorid-Komponente R₃In₂Cl₃ ist, ist ein Molverhältnis von Lithiumtetraalkylindat zu der Indiumchlorid-Komponente von etwa 3:1 besonders vorteilhaft. In Ausführungsformen, in denen die Indiumchlorid-Komponente RInCl₂ ist, ist ein Molverhältnis von Lithiumtetraalkylindat zu der Indiumchlorid-Komponente von etwa 2:1 besonders vorteilhaft.

Die Reaktion von Lithiumtetraalkylindat mit der Indiumchlorid-Komponente kann in einem organischen Lösungsmittel erfolgen. Geeignete organische Lösungsmittel für Schritt b2) sind ausgewählt aus Alkanen einschließlich von cyclischen gesättigten Kohlenwasserstoffen, Aromaten, Alkoholen, Ethern und cyclischen Ethern. Als organische Lösungsmittel für Schritt b2) haben sich insbesondere Alkane und Aromaten als geeignet erwiesen, bevorzugt ausgewählt aus *n-*Pentan, Cyclohexan, *n*-Decan, *n*-Heptan, *n*-Hexan, Methylcyclohexan, *n*-Nonan, *n*-Octan und Benzol, ganz besonders bevorzugt ist *n*-Pentan.

In alternativen Ausführungsformen wird kein organisches Lösungsmittel im Reaktionsschritt b2) verwendet, also kein organisches Lösungsmittel zusätzlich als Reaktionsmedium eingesetzt. Dies hat den Vorteil, dass mögliche, die Anwendbarkeit einschränkende organische Verunreinigungen in Verbindung (B) durch partielle Zersetzung des Lösungsmittels vermieden werden. Darüber hinaus kann das Verfahren hierdurch umweltschonender durchgeführt werden. In einer Ausführungsform wird Schritt b2) daher unter Abwesenheit organischer Lösungsmittel durchgeführt.

Vorzugsweise wird das LiInR₄ mit der Indiumchlorid-Komponente im Reaktor vorgelegt. Anschließend kann das organische Lösungsmittel zugesetzt werden. Vorzugsweise wird anschließend erhitzt, bevorzugt auf Temperaturen zwischen 30°C und 120°C, weiter bevorzugt auf Temperaturen zwischen 40°C und 100°C und noch mehr bevorzugt auf Temperaturen zwischen 50°C und 90°C. Vorzugsweise wird eine solche Temperatur für wenigstens 10 min und höchstens 24 Stunden, bevorzugt für wenigstens 30 min und höchstens 20 Stunden, weiter bevorzugt wenigstens 40 min und höchstens 12 Stunden und noch mehr bevorzugt für wenigstens 90 min und höchstens 3 Stunden aufrechterhalten.

Vorzugsweise wird anschließend abgekühlt, bevorzugt auf eine Temperatur von 25 +/- 5 °C.

Bevorzugt wird Verbindung (B) anschließend vom Gemisch isoliert. Das Isolieren von Verbindung (B) umfasst bevorzugt das Entfernen des organischen Lösungsmittels und von Verbindung (B) vom Reaktionsgemisch, das Salze wie beispielsweise Lithiumchlorid LiCl umfassen kann. Dies erfolgt insbesondere durch Umkondensieren von organischem Lösungsmittel und Verbindung (B) in ein neues Gefäß. Hierzu werden unter Vakuum alle flüchtigen Komponenten wie Verbindung (B) (also z.B. Trimethylindium) gemeinsam mit dem Lösungsmittel vom Rückstand (z.B. Salze wie LiCl) abdestilliert. Anschließend wird das Lösungsmittel von Verbindung (B) abgetrennt, bevorzugt durch Abdestillieren im Vakuum mit vorzugsweise einem Restgasdruck unter 0,1 hPa, weiter bevorzugt höchstens 0,01 hPa, vorzugsweise in eine Kühlfalle bei bevorzugt -10° +/- 5°C. Verbindung (B), beispielsweise Trimethylindium oder Triethylindium, bleibt dann im Gefäß zurück. Optional können sich weitere Reinigungsschritte anschließen nach dem Fachmann bekannten Reinigungsverfahren. Diese weiteren Reinigungsschritte können die Destillation, Sublimation oder Umkristallisation von Verbindung (B) umfassen.

In einer bevorzugten Ausführungsform läuft im Reaktionsschritt b2) schematisch folgende Reaktion ab:

LiInMe₄ + Me₂InCl → 2 Me₃In + LiCl

In einer alternativen Ausführungsform, in der die Indiumchlorid-Komponente Verbindung (A) ist, läuft im Reaktionsschritt b2) schematisch folgende Reaktion ab:

3 LiInMe₄ + Me₃In₂Cl₃ → 5 Me₃In + 3 LiCl

Die zusätzlichen Reaktionsschritte umfassend b1) und b2) ermöglichen die Herstellung von Verbindung (B) aus Verbindung (A) mit einer Ausbeute von vorzugsweise wenigstens 60%, weiter bevorzugt wenigstens 70%, noch weiter bevorzugt wenigstens 75% und ganz besonders bevorzugt von 85% sowie noch weiter bevorzugt über 90%. Die Reinheit der erfindungsgemäß hergestellten Verbindung (B) beträgt vorzugsweise wenigstens 99%, bevorzugt wenigstens 99,5% und besonders bevorzugt mehr als 99,8% sowie weiter bevorzugt mehr als 99,999%. Insbesondere bei Durchführung eines weiteren Reinigungsschrittes der hergestellten Verbindung (B), vorzugsweise durch Sublimation von Verbindung (B), kann eine Reinheit von > 99,999% erreicht werden.

### 2.2. Weiterverarbeitung der Verbindung (A) zu Verbindung (C)

In alternativen Ausführungsformen wird Verbindung (A) weiterverarbeitet zu Verbindung (C), indem zusätzliche weitere Reaktionsschritte an das erfindungsgemäße Verfahren angeschlossen werden umfassend:
c1) Abtrennung von Dialkylindiumchlorid (R₂InCl) aus Verbindung (A), und
c2) Reaktion von R₂InCl mit einem Alkylierungsmittel zur Bildung von Verbindung (C).

Besonders bevorzugt handelt es sich bei Verbindung (C) um Dimethylaminopropyldimethylindium (DADI) oder Ethyldimethylindium (Me₂InEt).

Im Verfahrensschritt c1) erfolgt eine Abtrennung von Dialkylindiumchlorid aus R₃In₂Cl₃, das wie oben beschrieben auch als Gemisch aus R₂InCl und RInCl₂ betrachtet werden kann, wobei das Dialkylindiumchlorid durch die allgemeine Formel R₂InCl gekennzeichnet ist, wobei R wie oben definiert ist und vorteilhaft Methyl oder Ethyl, insbesondere Methyl sein kann, wobei R durch den Rest "R" in Verbindung (A) festgelegt ist. Die Abtrennung von R₂InCl aus Verbindung (A) kann durch Sublimation erfolgen. Bevorzugt wird Verbindung (A) dafür auf Temperaturen zwischen 150°C und 200°C, weiter bevorzugt zwischen 155°C und 195°C und insbesondere zwischen 160°C und 190°C, erhitzt. Optional kann die Sublimation auch im Vakuum erfolgen. Dabei hat sich ein Vakuum bevorzugt mit einem Restgasdruck unter 1 hPa, weiter bevorzugt unter 0,1 hPa bewährt. Dem Fachmann ist bekannt, dass bei Durchführung von Verfahrensschritt c) im Vakuum die Abtrennung von R₂InCl auch bei entsprechend niedrigeren Temperaturen durchgeführt werden kann. Es erfolgt vorzugsweise eine Auftrennung in einen Bodensatz und ein Sublimat, wobei es sich bei dem Sublimat vorzugsweise um R₂InCl handelt.

Durch Zusatz eines oder mehrerer Alkalihalogenide wie zum Beispiel KCl, aber auch KF oder andere MX mit M=Na, K, Cs und X = F, Cl, Br, I) oder einer Mischung aus NaCl und KCl kann die Ausbeute bei der Sublimation deutlich gesteigert und R₂InCl vollständig abgetrennt werden.

In einer bevorzugten Ausführungsform läuft im Reaktionsschritt c1) schematisch folgende Reaktion ab:

2 R₃In₂Cl₃ + 2 KCl → 2 K[R₃In₂Cl₄] → K[InCl₄]+ KCl + 3 R₂InCl

Reaktionsschritt c1) erfolgt üblicherweise unter Schutzgas, zum Beispiel Argon oder Stickstoff. Alternativ kann Dialkylindiumchlorid R₂InCl auch in situ aus R₃In₂Cl₃ (Verbindung (A)) hergestellt und direkt weiter mit Alkylierungsmittel zu Verbindung (C) umgesetzt werden.

Das Alkylierungsmittel im Schritt c2) ist insbesondere ausgewählt aus R'MgX, R'Li und R'₃Al, wobei R' wie oben definiert ist. Besonders bevorzugt ist das Alkylierungsmittel Me₂N-(CH₂)₃-M, wobei M insbesondere MgCl oder Li ist, oder auch Ethyllithium (EtLi).

Die Umsetzung von R₂InCl zu R₂InR', beispielsweise DADI, kann in einem organischen Lösungsmittel erfolgen durch Reaktion mit dem Alkylierungsmittel, beispielsweise Me₂N-(CH₂)₃-M im Falle von DADI. Das organische Lösungsmittel kann ein Dialkylether oder ein cyclischer Ether sein oder Mischungen daraus, insbesondere Diethylether oder THF, weiter bevorzugt THF.

Reaktionsschritt c2) erfolgt üblicherweise unter Schutzgas.

Bevorzugt wird das Alkylierungsmittel vorzugsweise in einem organischen Lösungsmittel, insbesondere THF, vorgelegt und anschließend R₂InCl zugegeben. Dabei wird R₂InCl besonders bevorzugt als Mischung mit dem organischen Lösungsmittel, insbesondere THF, zugetropft. Das Zutropfen von R₂InCl erfolgt vorzugsweise langsam, bevorzugt über wenigstens 10 min, weiter bevorzugt über wenigstens 20 min. Die Zugabe von R₂InCl erfolgt bevorzugt bei einer Temperatur unter 50°C, weiter bevorzugt unter 40°C und besonders bevorzugt bei Raumtemperatur, also 25°C +/- 5°C.

Nach Zugabe aller Reaktanden, insbesondere Alkylierungsmittel und R₂InCl, wird bevorzugt gerührt. Bevorzugt liegt die Temperatur beim Rühren unter 50°C, weiter bevorzugt unter 40°C und besonders bevorzugt bei Raumtemperatur, also 25°C +/- 5°C. Es wird vorzugsweise für wenigstens 5 Stunden, weiter bevorzugt für wenigstens 10 Stunden gerührt. Aus Kostengründen werden Reaktionszeiten von 80 Stunden, weiter bevorzugt 50 Stunden bevorzugt nicht überschritten.

Anschließend wird Verbindung (C) vorzugsweise vom Reaktionsgemisch isoliert. Das Isolieren von Verbindung (C) kann das Entfernen des organischen Lösungsmittels, bevorzugt im Vakuum, und die Abtrennung von Verbindung (B) vom Reaktionsgemisch durch Filtration und/oder Destillation umfassen.

Die Alkylierungsmittel können mit bekannten Verfahren hergestellt werden, beispielsweise Me₂N-(CH₂)₃-M aus 3-Chlor-1-(dimethylamino)propan durch Umsetzung mit Magnesiumspänen oder Lithiumspänen. Üblicherweise erfolgt die Herstellung von Me₂N-(CH₂)₃-M in einem organischen Lösungsmittel, insbesondere THF, unter Wärmezufuhr. Gegebenenfalls kann dabei Iod zur Aktivierung zugesetzt werden. Andere bekannte Alkylierungmittel sind kommerziell erhältlich.Durch die Einhaltung der Bedingungen des oben dargestellten Herstellverfahrens zur Herstellung von Verbindung (A) sowie optional der Weiterverarbeitung zu Indium-haltigen Präkursoren, bevorzugt ausgewählt aus Verbindung (B) und (C), können diese Verbindungen in hoher Ausbeute und mit hoher Reinheit hergestellt werden. Erfindungsgemäß ist zudem die nach dem Verfahren hergestellte Verbindung (A), insbesondere Me₃In₂Cl₃, und die daraus erhältlichen Indium-haltigen Präkursoren, insbesondere Trimethylindium und Dimethylaminopropyldimethylindium, sowie R₂InCl. Daher betrifft die vorliegende Patentanmeldung auch die Verwendung der Verbindung (A) gemäß der vorliegenden Patentanmeldung zur Herstellung von Verbindung (B) gemäß Anspruch sowie die Verwendung der Verbindung (A) gemäß der vorliegenden Patentanmeldung zur Herstellung von Verbindung (C).

Weiter betrifft die vorliegende Patentanmeldung ein Verfahren zur Herstellung einer Indiumchlorid-Komponente der allgemeinen Formel:

**RₐIn_{b}Cl_{c},**

wobei a eine Zahl ausgewählt aus 0, 1, 2 und 3 ist und b eine Zahl ausgewählt aus 1 und 2 ist und c eine Zahl ausgewählt aus 1, 2 und 3 ist, und wobei a + b + c = 4 oder ein Vielfaches von 4 sind, besonders bevorzugt ist die Summe aus a, b und c = 4 oder 8, wobei R ein Alkylrest mit 1 bis 4 Kohlenstoffatomen ist, der Alkylrest verzweigt oder unverzweigt und insbesondere Ethyl oder Methyl sein kann, mit den Schritten
- Bereitstellen einer Verbindung (A) der Formel R₃In₂Cl₃ nach einem der Ansprüche 1 bis 10;
- Optional die Isolierung der Verbindung (A); wobei
die Indiumchlorid-Komponente insbesondere sein kann: R₂InCl, R₃In₂Cl₃, RInCl₂ und Mischungen davon, oder insbesondere Me₂InCl, Et₂InCl, MeInCl₂, EtInCl₂, Me₃In₂Cl₃ oder Et₃In₂Cl₃ (mit Et=Ethyl und Me=Methyl).

Weiter betrifft die vorliegende Patentanmeldung ein Verfahren zur Herstellung von Trialkylindium der Formel R₃In, wobei R ein Alkylrest mit 1 bis 4 Kohlenstoffatomen ist, der Alkylrest verzweigt oder unverzweigt und insbesondere Ethyl oder Methyl sein kann, mit den Schritten
- Bereitstellen einer Verbindung (A) nach einem der Ansprüche 1 bis 10;
- Optional die Isolierung der Verbindung (A);
- Umsetzung der Verbindung (A) mit einem Alkylierungsmittel zur Bildung von Verbindung (B) und
- dessen optionaler Isolierung und weiterer Reinigung.

Insbesondere die hohe Ausbeute und Reinheit sowie kosteneffiziente und wenig umweltbelastende Prozesswahl des erfindungsgemäßen Verfahrens prädestiniert das Verfahren zur industriellen Herstellung von Verbindung (A) beziehungsweise Indium-haltigen Präkursoren. Insbesondere entstehen erfindungsgemäß keine pyrophoren Zwischenprodukte, was im Lichte einer kosteneffektiven und gering aufwändigen Herstellung besonders vorteilhaft ist. Das erfindungsgemäße Verfahren ist insbesondere durch eine besonders hohe Indium-Ausnutzung gekennzeichnet. Der Indium-Gesamtumsatz des erfindungsgemäßen Verfahrens bezogen auf das eingesetzte Indium beträgt vorzugsweise ≥ 70%, weiter bevorzugt ≥ 75%, besonders bevorzugt ≥ 80% und noch mehr bevorzugt > 95%. Der Gehalt an Sauerstoff in der optional erhältlichen Verbindung (B) oder (C) einschließlich von Indiumalkoxiden und -oxiden liegt vorzugsweise bei < 100 ppm (m/m), insbesondere sogar bei < 1 ppm (m/m).

Die mit dem erfindungsgemäßen Verfahren optional herstellbaren Indiumhaltigen Präkursoren, insbesondere Trimethylindium und Dimethylaminopropyldimethylindium, eignen sich aufgrund der hervorragenden Reinheit, insbesondere des sehr niedrigen Sauerstoffgehaltes, besonders für MOCVD- Prozesse, beispielsweise zur Herstellung von Halbleitern oder Halbleiter-Bauelementen. Die schlussendlich hergestellten Halbleiter oder Halbleiter-Bauelemente sind vielseitig industriell einsetzbar. Erfindungsgemäß ist daher auch die Verwendung der erfindungsgemäß optional herstellbaren Verbindungen (B) und/oder (C) als Präkursoren für die metallorganische chemische Gasphasenabscheidung (MOCVD) oder die metallorganische Gasphasenepitaxie (MOVPE).

### Ausführungsbeispiele

Es wurde Me₃In₂Cl₃ (als Verbindung A) nach dem erfindungsgemäßen Verfahren hergestellt. Aus Verbindung (A) wurden ferner Me₃In als Verbindung (B) hergestellt. Ferner wurde Dimethylaminopropyldimethylindium als Verbindung (C) hergestellt.

### 1. Herstellung von Me₃In₂Cl₂

### 1.1. Herstellung von Methylindiumsesquichlorid mit Entfernung von Nebenprodukten während des Versuches

In einem 1L-Druckreaktor wurden 150,0 g (1,31 mol) Indium vorgelegt, der Reaktor wurde evakuiert und mit Chlormethan auf Normaldruck belüftet. Anschließend wurden 300,0 g Me₃In₂Cl₃ (aus einer vorherigen Charge) über einen auf 150 °C beheizten Tropftrichter flüssig in den Reaktor gegeben. Nun wurde 0,01MPa Chlormethan (Überdruck, entsprechend 0,11MPa absolut) aufgedrückt und das Reaktionsgemisch unter Rühren auf 190 °C erhitzt. Dabei schmolzen das Indium und das Me₃In₂Cl₃. Ab ca. 170 °C konnte eine starke Gasaufnahme beobachtet werden. Der Druck wurde im Folgenden auf einen Sollüberdruck von 0,2MPa eingestellt und es wurde entsprechend des Verbrauchs mit max. 0,5 L/min MeCl nachgefördert. Nach etwa vier Stunden ging die Gasaufnahme der Reaktion stark zurück. Daraufhin wurde die MeCl-Zufuhr in den Reaktor unterbrochen und der Überdruck im Reaktor über die Abgasleitung abgelassen. Anschließend wurde mit MeCl auf 0,3MPa Überdruck aufgedrückt und die Reaktion wurde fortgeführt. Nach 2,5 Stunden war die Gasaufnahme erneut auf Null gesunken, im Reaktor lag eine klare gelbliche Schmelze vor, in der kein metallisches Indium mehr sichtbar war. Die Gaszufuhr wurde deshalb gestoppt und der Reaktor über Nacht auf Raumtemperatur abgekühlt. Am nächsten Tag wurde der Reaktor wieder auf 180°C aufgeheizt und es wurden 0,2MPa Überdruck MeCl aufgedrückt, es fand jedoch keine weitere Gasaufnahme mehr statt. Zur Beendigung der Reaktion wurde deshalb die Gaszufuhr geschlossen, der Rührer abgeschaltet und das Reaktionsgemisch auf Raumtemperatur abgekühlt, dabei erstarrte das Reaktionsprodukt bei ca. 100 °C. Der verbleibende Überdruck des Reaktors wurde abgelassen und der Reaktor evakuiert um restliches Chlormethan und flüchtige Nebenprodukte zu entfernen. Anschließend wurde der Reaktor mit Argon auf Normaldruck gebracht, das Reaktionsprodukt durch Heizen auf 150°C aufgeschmolzen und flüssig aus dem Reaktor abgelassen.
Es wurden 545,7 g Produkt als gräulich-weißer Feststoff erhalten. Reinheit laut NMR: 97,6%.
¹H-NMR (600 MHz, CD₃CN) δ = 0,09 ppm (C*H*₃)₂InCl, 0,19 ppm (C*H*₃)InCl₂, im Verhältnis 1,08:1, dies entspricht einer Zusammensetzung von ca. 33% Me₂InCl und 67% MeInCl₂. Elementaranalyse: In 58,8; C 8,29; H 2,13; Cl 30,0. (berechnet: In 59,3; C 8,4; H 2,1; Cl 30,2)

### 1.2. Herstellung von Methylindiumsesquichlorid

In einem 1L-Druckreaktor wurden 300,0 g (2,61 mol) Indium vorgelegt, der Reaktor wurde evakuiert und mit Argon auf Normaldruck belüftet. Anschließend wurden 150,0 g Me₃In₂Cl₃ (aus einer vorherigen Charge) im Argon-Gegenstrom als Feststoff in den Reaktor gegeben. Der Reaktor wurde erneut evakuiert und 0,2MPa Chlormethan (Überdruck, entsprechend 0,3MPa absolut) aufgedrückt und das Reaktionsgemisch wurde unter Rühren auf 200 °C erhitzt. Dabei schmolzen das Indium und das Me₃In₂Cl₃. Die Reaktion startete sofort, erkennbar an einer starken Gasaufnahme und einer Orange-Färbung des Me₃In₂Cl₃. Das MeCl wurde während der Reaktion entsprechend des Verbrauchs und des eingestellten Sollüberdruckes mit max. 0,5 L/min in den Reaktor nachgefördert. Nach ca. einer Stunde wurde der Druck auf einen Sollüberdruck von 0,3MPa eingestellt, nach einer weiteren Stunde wurde der Sollüberdruck auf 0,35MPa erhöht. Nach etwa drei Stunden wurde die Reaktion durch Abkühlung des Reaktors auf Raumtemperatur über Nacht unterbrochen, es waren noch geringe Mengen an metallischem Indium in der Reaktionsschmelze sichtbar.
Am nächsten Tag wurde der MeCI-Sollüberdruck auf 0,2MPa gestellt und die Reaktion durch Erhitzen auf 200 °C und erneutes Einleiten von MeCl wieder aufgenommen. Nach ca. zwei Stunden wurde der Sollüberdruck auf 0,3MPa erhöht. Nach weiteren zwei Stunden war kein metallisches Indium mehr in der grünlich-gelben Reaktionsschmelze sichtbar, die Reaktion wurde aber noch etwa 1,5 Stunden fortgeführt, bis kein MeCl mehr aufgenommen wurde.
Die Gaszufuhr wurde geschlossen, der Überdruck des Reaktors abgelassen und die entstandene hellbraune Schmelze unter MeCl-Atmosphäre auf Raumtemperatur abgekühlt, dabei erstarrte das Reaktionsprodukt bei ca. 100 °C. Anschließend wurde der Reaktor evakuiert und anschließend mit Argon begast um restliches Chlormethan und flüchtige Nebenprodukte zu entfernen. Die erstarrte Schmelze wurde durch Heizen auf 150 °C wieder aufgeschmolzen und flüssig aus dem Reaktor abgelassen. Es wurden 594,8 g Produkt als weißer Feststoff erhalten. Dies entspricht einer Ausbeute von 91,5% bezogen auf das gesamte eingesetzte Indium (metallisches Indium + Me₃In₂Cl₃). Reinheit laut NMR 99,1%. ¹H-NMR (600 MHz, CD₃CN) δ = 0,08 ppm (C*H*₃)₂InCl, 0,17 ppm (C*H*₃)InCl₂, im Verhältnis 1,5:1, dies entspricht einer Zusammensetzung von ca. 40,5% Me₂InCl und 59,5% MeInCl₂. Elementaranalyse: In 59,7; Cl 27,5; H 2,3; C 8,82 (berechnet In 59,8; Cl 29,0; H 2,3; C 8,7).

### 1.3. Herstellung von Methylindiumsesquichlorid

In einem 1L-Druckreaktor wurden 300,1 g (2,62 mol) Indium vorgelegt, der Reaktor wurde evakuiert und mit Chlormethan auf Normaldruck belüftet. Anschließend wurden 299,4 g Me₃In₂Cl₃ (aus einer vorherigen Charge) als Feststoff im Argon-Gegenstrom in den Reaktor gegeben. Nun wurden 2 bar Chlormethan (Überdruck, entsprechend 0,3MPa absolut) aufgedrückt und das Reaktionsgemisch unter Rühren auf 200 °C erhitzt. Dabei schmolzen Me₃In₂Cl₃ und Indium. Die Reaktion startete sofort, erkennbar an einer Orange-Färbung des flüssigen Me₃In₂Cl₃ und dem Beginn der Gasaufnahme. Der Druck wurde im Folgenden auf einen Sollüberdruck von 0,3MPa eingestellt und es wurde mit max. 0,5 L/min MeCl nachgefördert.

Das Reaktionsgemisch wurde bei einer Reaktionstemperatur von 190-200 °C gehalten, bis kein metallisches Indium mehr im Reaktor sichtbar war.
Dann wurde die Gaszufuhr geschlossen, der Überdruck des Reaktors abgelassen und die entstandene Schmelze unter MeCl-Atmosphäre auf Raumtemperatur abgekühlt, dabei erstarrte das Reaktionsprodukt bei ca. 100 °C. Anschließend wurde der Reaktor evakuiert um restliches Chlormethan und flüchtige Nebenprodukte zu entfernen und danach mit Argon begast. Das erstarrte Reaktionsprodukt wurde durch Heizen auf 160 °C wieder aufgeschmolzen und flüssig aus dem Reaktor abgelassen. Es wurden 713,14 g Produkt als weißer Feststoff erhalten. Dies entspricht einer Ausbeute von 90,2% bezogen auf das gesamte eingesetzte Indium (metallisches Indium + Me₃In₂Cl₃). ¹H-NMR (600 MHz, CD₃CN) δ = 0,08 ppm (C*H*₃)₂InCl, 0,19 ppm (C*H*₃)InCl₂, im Verhältnis 1,3:1, dies entspricht einer Zusammensetzung von ca. 37% Me₂InCl und 63% MeInCl₂. Elementaranalyse: In 60,1; Cl 29,2; C 8,6; H 2,2. (berechnet In 59,6; Cl 29,6; C 8,7; H 2,2). Zusätzlich konnte vom Reaktordeckel 66,71 g weißer Feststoff (entsprechend 8,9% des eingesetzten Indiums) abgekratzt werden, der als Dimethylindiumchlorid (93% Reinheit laut NMR) identifiziert wurde. ¹H-NMR (600 MHz, CD₃CN) δ = 0,00 ppm (C*H*₃)₂InCl, Elementaranalyse: In 64,0; Cl 20,4; C 12,9; H 3,2. (berechnet In 63,3; Cl 20,8; C 12,8, H 3,2).

### 1.4 Herstellung von Methylindiumsesquichlorid

In einem 1L-Druckreaktor wurden 150,0 g (1,31 mol) Indium vorgelegt, der Reaktor wurde evakuiert und mit Chlormethan auf Normaldruck belüftet. Anschließend wurden 300,0 g (0,79 mol) Me₃In₂Cl₃ (aus einer vorherigen Charge) über einen auf 150 °C beheizten Tropftrichter flüssig in den Reaktor gegeben. Nun wurde 0,03MPa Chlormethan (Überdruck, entsprechend 0,13MPa absolut) aufgedrückt und das Reaktionsgemisch unter Rühren auf 200 °C erhitzt. Dabei schmolz das Indium. Die Reaktion startete sofort, erkennbar an einer starken Gasaufnahme. Der Druck wurde im Folgenden auf einen Sollüberdruck von 3 bar eingestellt und es wurde mit max. 0,5 L/min MeCl nachgefördert, allerdings war die Gasaufnahme der Reaktion zunächst so stark, dass der Solldruck nicht erreicht werden konnte. Nach etwa drei Stunden nahm die Reaktion kein Gas mehr auf und es war kein metallisches Indium mehr im Reaktor sichtbar.
Die Gaszufuhrwurde geschlossen, der Überdruck des Reaktors abgelassen und die entstandene hellbraune Schmelze unter MeCl-Atmosphäre auf Raumtemperatur abgekühlt, dabei erstarrte das Reaktionsprodukt bei ca. 100 °C. Anschließend wurde der Reaktor dreimal evakuiert und jeweils mit Argon begast um restliches Chlormethan und flüchtige Nebenprodukte zu entfernen. Die erstarrte Schmelze wurde durch Heizen auf 150 °C wieder aufgeschmolzen und flüssig aus dem Reaktor abgelassen.
Es wurden 540,49 g Produkt als weißer, leicht bräunlicher Feststoff erhalten. Dies entspricht einer Ausbeute von 98,8% bezogen auf das gesamte eingesetzte Indium (metallisches Indium + Me₃In₂Cl₃).
¹H-NMR (600 MHz, CD₃CN) δ = 0,08 ppm (C*H*₃)₂InCl, 0,18 ppm (C*H*₃)InCl₂, im Verhältnis 1,4:1, dies entspricht einer Zusammensetzung von ca. 38% Me₂InCl und 62% MeInCl₂. Elementaranalyse: In 59,7; Cl 29,8. (berechnet In 59,7; Cl 29,3).

### 1.5 Herstellung von Methylindiumsesquichlorid (semikontinuierlicher Versuch)

In einem 1L-Druckreaktor wurden 150,2 g (1,31 mol) Indium vorgelegt und der Reaktor wurde evakuiert. Über einen Tropftrichter wurden 353,0 g Me₃In₂Cl₃ flüssig in den Reaktor abgelassen. Nun wurde die Chlormethan-Zufuhr geöffnet (Sollüberdruck 0,3MPa und das Reaktionsgemisch unter Rühren auf 200 °C erhitzt. Das Reaktionsgemisch wurde zweieinhalb Stunden bei einer Reaktionstemperatur von 190-200 °C gehalten, bis kein metallisches Indium mehr im Reaktor sichtbar war und die Reaktion kein Gas mehr aufnahm. Das Reaktionsgemisch wurde noch zwei Stunden ohne Gaszufuhr bei Reaktionstemperatur gerührt, anschließend wurde der Reaktor druckentlastet und 380 g Me₃In₂Cl₃ flüssig aus dem Reaktor abgelassen. Der Rest des Me₃In₂Cl₃ (ca. 220 g) verblieb im Reaktor. Der Reaktor wurde über Nacht auf Raumtemperatur heruntergekühlt. Dieses Vorgehen wurde noch dreimal hintereinander wiederholt. Dazu wurden jeweils 150,0 g Indium zu dem im Reaktor verbliebenen Me₃In₂Cl₃ gegeben, die Reaktion durch Erhitzen auf Reaktionstemperatur und Start der Gaszufuhr wieder gestartet und nach der Reaktionszeit zweimal jeweils ca. 250 g Me₃In₂Cl₃ (entsprechend 1,3 mol Indium) aus dem Reaktor abgelassen. Beim letzten Durchgang wurde der Versuch durch Ablassen des gesamten Me₃In₂Cl₃ aus dem Reaktor beendet.
Es wurden insgesamt 1280 g Me₃In₂Cl₃ isoliert. ¹H-NMR (600 MHz, CD₃CN) 5 = 0,08 ppm (C*H*₃)₂InCl, 0,17 ppm (C*H*₃)InCl₂; durchschnittliche Zusammensetzung laut ¹H-NMR: 40,2% Me₂InCl und 59,8% MeInCl₂. Elementaranalyse: In 60,1; Cl 28,8, entsprechend 6,67 mol Indium. Dies entspricht einer Ausbeute von 94,3% bezogen auf das gesamte eingesetzte Indium (7,07 mol).

### 2. Weiterverarbeitung von Me₃In₂Cl₃ zu Me₃In

### 2.1. Reaktion von Me₃In₂Cl₃ mit MeLi zur Bildung von LiInMe₄

1430 mg Me₃In₂Cl₃ (3,75 mmol, wurden bei 0°C zu 12 mL einer MeLi-Lösung (1,565 mol/L in Diethylether) gegeben. Nach ca. 1 h Rühren bei Raumtemperatur wurde die Suspension ohne Celite filtriert und das Filtrat vom Lösungsmittel befreit. Es wurden 1128 mg eines farblosen Feststoffes isoliert (entspricht 6,2 mmol LiInMe₄, Ausbeute: 83%).

### 2.2. Reaktion von LiInMe₄ mit Me₃In₂Cl₃ zur Bildung von Me₃In

947 mg LiInMe₄ (5,2 mmol, aus Beispiel 2.1) und 660 mg Me₃In₂Cl₃ (1,73 mmol) wurden in einer 125 mL Parr-Bombe vorgelegt und mit 10 mL Pentan versetzt. Anschließend wurde die Parr-Bombe in ein auf 70°C vorgeheiztes Ölbad getaucht und zwei Stunden bei dieser Temperatur gerührt. Bei 70°C war eine klare Flüssigkeit mit grauem Festkörper (LiCl und Verunreinigungen) auszumachen, die beim Abkühlen auf Raumtemperatur zu einem Kristallbrei erstarrte. Die flüchtigen Bestandteile der Parr-Bombe wurden in eine Kühlfalle umkondensiert (RT→-78°C) und anschließend das Lösungsmittel Pentan bei -8°C (Kochsalz-Eis-Mischung) im Feinvakuum entfernt. Es konnten 980 mg eines farblosen Feststoffes isoliert werden, der nur mit Spuren von Lithiumchlorid verunreinigt war. Entspricht 6,1 mmol/Ausbeute: 70% Trimethylindium.

### 2.3. Reaktion von LiInMe₄ mit Me₂InCl zur Bildung von Me₃In

1079 mg LiInMe₄ (5,9 mmol) und 1067 mg Me₂InCl (5,9 mmol) wurden in einer 125 mL Parr-Bombe vorgelegt und mit 20 mL Pentan versetzt. Anschließend wurde die Parr-Bombe in ein auf 70°C vorgeheiztes Ölbad getaucht und über Nacht bei dieser Temperatur gerührt. Bei 70°C war eine leicht trübe Suspension auszumachen, die beim Abkühlen auf Raumtemperatur zu einem Kristallbrei erstarrte. Die flüchtigen Bestandteile der Parr-Bombe wurden in eine Kühlfalle umkondensiert (RT → -78 °C) und anschließend das Lösungsmittel Pentan bei -8°C (Kochsalz-Eis-Mischung) im Feinvakuum entfernt. Es konnten 1591 mg eines farblosen Feststoffes isoliert werden (10.0 mmol, Ausbeute: 81% Trimethylindium).

### 2.4. Darstellung von Trimethylindium aus Me₃In₂Cl₃

In einem 100 mL-Dreihalskolben wurden unter Schutzgas 3,36 g (8,8 mmol) Me₃In₂Cl₃ und 3,19 g (54,9 mmol) KF in 20 mL Squalan vorgelegt. Über einen Tropftrichter wurden unter Rühren 2,05 g (28,4 mmol) Me₃Al, gelöst in 6 mL Squalan, zugetropft. Nach vollständiger Zugabe wurde das Reaktionsgemisch 3 Stunden auf 80 °C erhitzt, dabei schieden sich an den kälteren Flächen des Kolbens bereits feine farblose Kristalle ab. Anschließend wurde vorsichtig Vakuum auf die Apparatur gezogen und das Trimethylindium in eine mit flüssigem Stickstoff gekühlte Vorlage sublimiert. Es konnten 2,60 g (16,3 mmol, 92,6% Ausbeute) Trimethylindium als farbloser, kristalliner Feststoff isoliert werden.

Das erhaltene Produkt enthielt noch geringe Mengen Me₃Al als Verunreinigung. ¹H-NMR (C₆D₆): -0,23 ppm (C*H*₃)₃In.

### 2.4. Darstellung von Trimethylindium aus Me₃In₂Cl₃ durch Grignard-Reaktion

In einem 250 mL-Dreihalskolben mit Rückflusskühler werden unter Schutzgas 10,0 g (26,2 mmol) Me₃In₂Cl₃ in 50 mL trockenem THF vorgelegt. Über einen Tropftrichter werden langsam 27,1 mL (81,2 mmol, 3,1 eq) einer 3 molaren MeMgI-Lösung in Diethylether so zugetropft, das ein konstanter Rückfluss entsteht. Nach beendeter Zugabe wird das Reaktionsgemisch zur Vervollständigung der Reaktion noch eine Stunde unter Rückfluss erhitzt. Abschließend wird das Reaktionsgemisch auf Raumtemperatur abgekühlt, der Tropftrichter und der Rückflusskühler vom Kolben entfernt und durch einen mit flüssigem Stickstoff gekühlten Vorlagekolben ersetzt. Im Vakuum wird nun unter langsamen Erwärmen des Reaktionskolbens auf 180 °C das entstandene Trimethylindium-Diethylether-Addukt in die Vorlage destilliert. Zur Isolierung von Trimethylindium wird das Addukt anschließend mit etwas trockenem Benzol versetzt und die Lösungsmittel in einer fraktionierten Destillation über eine Vigreuxkolonne abgetrennt.

### 3. Weiterverarbeitung von Me₃In₂Cl₃ zu Dimethylaminopropyldimethylindium (DADI)

### 3.1. Abtrennung von Me₂InCl aus Me₃In₂Cl₃ durch Sublimation

1050 mg (2.76 mmol) Me₃In₂Cl₃ wurden in einem Schlenkkolben über Nacht in ein auf 170-180°C heißes Ölbad getaucht. Ein farbloser Feststoff resublimierte an den kälteren Regionen des Schlenkkolbens. Nach Abkühlen auf Raumtemperatur war am Boden eine erkaltete Schmelze auszumachen. Masse des sublimierten Feststoffes (Me₂InCl, identifiziert über ¹H-NMR): 160 mg (0.89 mmol, Ausbeute: 32%). Masse der erkalteten Schmelze: 860 mg.

### 3.2 Abtrennung von Me₂InCl aus Me₃In₂Cl₃ durch Sublimation in Gegenwart von KCl

1.60 g (4.20 mmol) Me₃In₂Cl₃ wurden zusammen mit 0.44 g (5.91 mmol) KCl in einem mit einem Sublimationsrohr ausgestatteten Schlenkkolben bei 140 °C zusammengeschmolzen bis eine klare homogene Schmelze erhalten wurde. Nach Abkühlen auf Raumtemperatur wurde das ganze System auf 10⁻³ mbar evakuiert und die erstarrte Schmelze langsam auf 190 °C erhitzt. Dabei begann der Feststoff zu schmelzen und gleichzeitig war die Resublimation eines farblosen Feststoffes im Sublimationsrohr zu beobachten. Nach ca. zwei Stunden hatte sich die Schmelze in einen farblosen Feststoff umgewandelt und die Sublimation wurde beendet. Aus dem Sublimationsrohr konnten 1.12 g (6.22 mmol, Ausbeute: 99%) Me₂InCl als farbloser Feststoff, identifiziert über ¹H-NMR, erhalten werden.

### 3.3. Reaktion von Me₂InCl mit Dimethylaminopropylmagnesiumchlorid

In einem 500 mL-Dreihalskolben wurden 150 mL getrocknetes THF und 5.26g (216 mmol, 1.95 Äquiv.) Magnesium-Späne vorgelegt und auf Rückfluss erhitzt. Nach Zugabe einer Spatelspitze Iod zur Aktivierung des Magnesiums wurden 15.55 g (126 mmol, 1.14 Äquiv.) 3-Dimethylaminopropylchlorid langsam zugetropft und anschließend das Reaktionsgemisch für 2.5 h weiter unter Rückfluss erhitzt. Nach Abkühlen des Reaktionsgemisches auf Raumtemperatur wurden 20.00 g (111 mmol) Me₂InCl gelöst in 150 mL getrocknetem THF innerhalb von 30 Minuten zugetropft und die entstehende Reaktionslösung 20 Stunden bei Raumtemperatur gerührt.
Anschließend wurde das THF im Vakuum entfernt, der Rückstand in 100 mL getrocknetem Hexan suspendiert, 2 h bei Raumtemperatur gerührt, der entstandene weiße Feststoff über eine Umkehrfritte abgetrennt und zweimal mit je 50 mL getrocknetem Hexan gewaschen. Das klare Filtrat wurde im Vakuum zur Trockne eingeengt und zur Reinigung bei 80°C und 0,5Mpa destilliert. Es wurde DADI als klare Flüssigkeit erhalten (19.7 g, 85.3 mmol, Ausbeute: 77%).

### 3.4 Reaktion von Me₂InCl mit 3-Dimethylaminopropyllithium

In einem 500 mL-Dreihalskolben wurden 75 mL getrocknetes THF und 1.16 g (170 mmol, 3 Äquiv.) Lithium-Späne vorgelegt und auf Rückfluss erhitzt.
Nach Erreichen des Rückflusses wurden 10.12 g (83.2 mmol, 1.5 Äquiv.) 3-Dimethylaminopropylchlorid langsam zugetropft und anschließend das Reaktionsgemisch für 2.5 h weiter unter Rückfluss erhitzt. Nach Abkühlen des Reaktionsgemisches auf Raumtemperatur wurden 10.00 g (55.4 mmol) Me₂InCl gelöst in 75 mL getrocknetem THF innerhalb von 30 Minuten zugetropft und die entstehende Reaktionslösung 20 Stunden bei Raumtemperatur gerührt. Anschließend wurde das THF im Vakuum entfernt, der Rückstand in 100 mL getrocknetem Pentan suspendiert, 2 h bei Raumtemperatur gerührt, der entstandene weiße Feststoff über eine Umkehrfritte abgetrennt und zweimal mit je 50 mL getrocknetem Pentan gewaschen. Das klare Filtrat wurde im Vakuum zur Trockne eingeengt und zur Reinigung bei 80°C destilliert. Es wurde DADI als klare Flüssigkeit erhalten.

## Patentansprüche

1. Verfahren zur Herstellung einer Verbindung (A) der allgemeinen Formel:
**R₃In₂Cl₃**
umfassend die Reaktionsschritte
a1) Reaktion von Indium mit einem Alkyldonor zur Bildung der Verbindung (A), wobei der Alkyldonor Alkylchlorid (RCl) und wobei R ein verzweigter oder unverzweigter Alkylrest mit 1 bis 4 Kohlenstoffatomen ist,
a2) und optional Isolierung von Verbindung (A) vom Reaktionsgemisch;
wobei als Reaktionsmedium eine Verbindung der Formel R₃In₂Cl₃ eingesetzt wird und das Verhältnis Indium zum Reaktionsmedium 0,5:10 bis 2:1 oder 1:1,5 bis 1,5:1 (bezogen auf das Gewicht) beträgt.

2. Verfahren nach Anspruch 1, wobei R Methyl oder Ethyl, insbesondere Methyl ist.

3. Verfahren nach einem der Ansprüche 1 oder 2, wobei das Molverhältnis von Indium zur Verbindung der Formel R₃In₂Cl₃ 1:1 bis 8:1, insbesondere 1:1 bis kleiner als 4:1 ist.

4. Verfahren nach Anspruch 3, wobei das Molverhältnis von Indium zur Verbindung der Formel R₃In₂Cl₃ 1:1 bis 3,8:1, oder 1:1 bis 3,5:1 beträgt.

5. Verfahren nach einem oder mehreren Ansprüche 1 bis 4, wobei die Verbindung der Formel R₃In₂Cl₃ eine Kombination ist aus Dialkylindiumchlorid (R₂InCl) und Alkylindiumdichlorid (RInCl₂).

6. Verfahren nach Anspruch 5, wobei die Verbindung der Formel R₃In₂Cl₃ eine Kombination ist aus Dialkylindiumchlorid (R₂InCl) und Alkylindiumdichlorid (RInCl₂) im Molverhältnis von 30:70 bis 50:50, insbesondere von 32:68 bis 42:58.

7. Verfahren nach einem oder mehreren der Ansprüche 1 bis 6, wobei als Alkyldonor gasförmiges Alkylchlorid eingesetzt wird.

8. Verfahren nach einem oder mehreren der Ansprüche 1 bis 7, wobei 1,5 bis 5 Äquivalente, insbesondere 1,65 bis 2,9 Äquivalente Alkyldonor pro Äquivalent Indium eingesetzt werden.

9. Verfahren nach einem oder mehreren der Ansprüche 1 bis 8, wobei das Indium im Reaktionsschritt a1) im Reaktionsgefäß vorgelegt und der Alkyldonor anschließend zugegeben wird.

10. Verfahren nach Anspruch 9, wobei die Zugabe des Alkyldonors bei Temperaturen von oberhalb 20°C und bei einem Überdruck von 0,1 bar bis 6 bar durchgeführt wird.

11. Verfahren nach einem oder mehreren der Ansprüche 1 bis 10, wobei die Reaktionstemperatur 160°C bis 220°C, insbesondere 180°C bis 200°C beträgt.

12. Verfahren nach einem oder mehreren der Ansprüche 1 bis 11, wobei das Verfahren die Isolierung von Verbindung (A) als Schritt a2) umfasst, und wobei die Isolierung das Abtrennen flüchtiger Nebenbestandteile vom im Reaktionsgefäß befindlichen Reaktionsgemisch und die nachfolgende Entnahme von Verbindung (A) aus dem Reaktionsgefäß umfasst.

13. Verfahren zur Herstellung einer Verbindung (B) der allgemeinen Formel
**R₃In,**
wobei R ein verzweigter oder unverzweigter Alkylrest mit 1 bis 4 Kohlenstoffatomen ist, umfassend die Reaktionsschritte
- Bereitstellen der Verbindung (A) nach einem der Ansprüche 1 bis 12;
- Reaktion der Verbindung (A) mit Alkylierungsmittel zur Bildung von Verbindung (B).

14. Verfahren zur Herstellung einer Verbindung (B) der allgemeinen Formel
**R₃In,**
umfassend die Reaktionsschritte
b0) Bereitstellen der Verbindung (A) nach einem der Ansprüche 1 bis 12;
b1) Reaktion von Verbindung (A) mit einem Alkyllithium zur Bildung von Lithiumtetraalkylindat (LiInR₄), und Isolierung von LiInR₄ vom Reaktionsgemisch, und
b2) Reaktion von LiInR₄ mit einer Indiumchlorid-Komponente, um die Verbindung (B) zu erhalten
wobei R ein verzweigter oder unverzweigter Alkylrest mit 1 bis 4 Kohlenstoffatomen ist.

15. Verfahren nach Anspruch 14, wobei die Indiumchlorid-Komponente die allgemeine Formel aufweist:
**RₐIn_{b}Cl_{c}**
wobei a eine Zahl ausgewählt aus 0, 1, 2 und 3 und b eine Zahl ausgewählt aus 1 und 2 und c eine Zahl ausgewählt aus 1, 2 und 3 ist, und wobei a + b + c = 4 oder ein Vielfaches von 4 ist, und wobei R ein Alkylrest mit 1 bis 4 Kohlenstoffatomen ist, und wobei R verzweigt oder unverzweigt ist.

16. Verfahren nach einem der Ansprüche 14 oder 15, wobei die Indiumchlorid-Komponente ausgewählt ist aus R₂InCl, R₃In₂Cl₃, RInCl₂, InCl₃, insbesondere R₂InCl, R₃In₂Cl₃, RInCl₂, und Mischungen daraus.

17. Verfahren nach Anspruch 13, wobei das Alkylierungsmittel ausgewählt ist aus R-MgX, R-Li und R₃Al, wobei R ein verzweigter oder unverzweigter Alkylrest mit 1 bis 4 Kohlenstoffatomen ist.

18. Verfahren zur Herstellung einer Verbindung (C) mit der allgemeinen Formel:
**R₂InR'**
umfassend folgende Reaktionsschritte:
c0)Bereitstellen der Verbindung (A) nach einem der Ansprüche 1 bis 10;
c1) Abtrennen von Dialkylindiumchlorid aus Verbindung (A), wobei das Dialkylindiumchlorid der allgemeinen Formel genügt:
**R₂InCl,**
wobei R wie oben definiert ist; und
c2) Reaktion von R₂InCl mit einem Alkylierungsmittel zur Bildung von Verbindung (C)
wobei R' ein nukleophiler Rest ist ausgewählt aus der Gruppe bestehend ausverzweigtem oder unverzweigtem und substituiertem oder unsubstituiertem Alkyl, verzweigtem oder unverzweigtem und substituiertem oder unsubstituiertem Aryl, welche insbesondere mit verzweigten oder unverzweigten Alkyl- oder Alkoxygruppen, oder mit Aminresten substituiert sein können.

19. Verfahren nach Anspruch 18, wobei das Alkylierungsmittel ausgewählt ist aus R'MgX, R'Li und R'₃Al.

20. Verfahren nach einem der Ansprüche 18 oder 19, wobei R Methyl ist, und wobei R' ein Me₂N-(CH₂)₃-Rest oder ein Ethylrest ist.

21. Verfahren zur Herstellung einer Indiumchlorid-Komponente der allgemeinen Formel:
**RₐIn_{b}Cl_{c},**
wobei a eine Zahl ausgewählt aus 0, 1, 2 und 3 ist und b eine Zahl ausgewählt aus 1 und 2 ist und c eine Zahl ausgewählt aus 1, 2 und 3 ist, und wobei a + b + c = 4 oder ein Vielfaches von 4 sind, besonders bevorzugt ist die Summe aus a, b und c = 4 oder 8, wobei R ein Alkylrest mit 1 bis 4 Kohlenstoffatomen ist, der Alkylrest verzweigt oder unverzweigt und insbesondere Ethyl oder Methyl sein kann, mit den Schritten
- Bereitstellen einer Verbindung (A) der Formel R₃In₂Cl₃ nach einem der Ansprüche 1 bis 10;
- Optional die Isolierung der Verbindung (A); wobei
die Indiumchlorid-Komponente insbesondere sein kann: R₂InCl, R₃In₂Cl₃, RInCl₂ und Mischungen davon, oder insbesondere Me₂InCl, Et₂InCl, MeInCl₂, EtInCl₂, Me₃In₂Cl₃ oder Et₃In₂Cl₃ (mit Et=Ethyl und Me=Methyl).

22. Verfahren nach einem der Ansprüche 13 oder 17 zur Herstellung von Trialkylindium der Formel R₃In, wobei R ein Alkylrest mit 1 bis 4 Kohlenstoffatomen ist, der Alkylrest verzweigt oder unverzweigt und insbesondere Ethyl oder Methyl sein kann, mit den Schritten
- Bereitstellen einer Verbindung (A) nach einem der Ansprüche 1 bis 10;
- Optional die Isolierung der Verbindung (A);
- Umsetzung der Verbindung (A) mit einem Alkylierungsmittel zur Bildung von Verbindung (B) und
- dessen optionaler Isolierung und weiterer Reinigung.

## Claims

1. Method for producing a compound (A) having the general formula:
**R₃In₂Cl₃**
comprising the reaction steps of
a1) reacting indium with an alkyl donor to form compound (A), wherein the alkyl donor is alkyl chloride (RCI), and R is a branched or unbranched alkyl radical having 1 to 4 carbon atoms,
a2) and optionally isolating compound (A) from the reaction mixture;
wherein a compound having the formula R₃In₂Cl₃ is used as reaction medium, and the ratio of indium to the reaction medium is 0.5:10 to 2:1 or 1:1.5 to 1.5:1 (with respect to weight).

2. Method according to claim 1, wherein R is methyl or ethyl - in particular, methyl.

3. Method according to one of claims 1 or 2, wherein the molar ratio of indium to the compound having the formula R₃In₂Cl₃ is 1:1 to 8:1 - in particular, 1:1 to less than 4:1.

4. Method according to claim 3, wherein the molar ratio of indium to the compound having the formula R₃In₂Cl₃ is 1:1 to 3.8:1, or 1:1 to 3.5:1.

5. Method according to one or more of claims 1 through 4, wherein the compound having the formula R₃In₂Cl₃ is a combination of dialkyl indium chloride (R₂InCl) and alkyl indium dichloride (RInCl₂).

6. Method according to claim 5, wherein the compound having the formula R₃In₂Cl₃ is a combination of dialkyl indium chloride (R₂InCl) and alkyl indium dichloride (RInCl₂) in a molar ratio of 30:70 to 50:50 - in particular, 32:68 to 42:58.

7. Method according to one or more of claims 1 through 6, wherein gaseous alkyl chloride is used as the alkyl donor.

8. Method according to one or more of claims 1 through 7, wherein 1.5 to 5 equivalents - in particular, 1.65 to 2.9 equivalents - of alkyl donor are used per equivalent of indium.

9. Method according to one or more of claims 1 through 8, wherein the indium in reaction step a1) is provided in a reaction vessel, and the alkyl donor is subsequently added.

10. Method according to claim 9, wherein the alkyl donor is added at temperatures above 20 °C and at an overpressure of 0.1 bar to 6 bar.

11. Method according to one or more of claims 1 through 10, wherein the reaction temperature is 160 °C to 220 °C - in particular, 180 °C to 200 °C.

12. Method according to one or more of claims 1 through 11, wherein the method comprises the isolation of compound (A) as step a2), and wherein the isolation comprises the separation of volatile secondary components from the reaction mixture located in the reaction vessel and the subsequent removal of compound (A) from the reaction vessel.

13. Method for producing a compound (B) having the general formula
**R₃In,**
wherein R is a branched or unbranched alkyl radical having 1 to 4 carbon atoms, comprising the reaction steps of
- providing the compound (A) according to one of claims 1 through 12;
- reacting the compound (A) with alkylating agent to form compound (B).

14. Method for producing a compound (B) having the general formula
**R₃In,**
comprising the reaction steps of
b0) providing the compound (A) according to one of claims 1 through 12;
b1) reacting compound (A) with an alkyl lithium to form lithium tetraalkylindate (LiInR₄), and isolating LiInR₄ from the reaction mixture, and
b2) reacting LiInR₄ with an indium chloride component to obtain compound (B),
wherein R is a branched or unbranched alkyl radical having 1 to 4 carbon atoms.

15. Method according to claim 14, wherein the indium chloride component comprises the general formula:
**RₐIn_{b}Cl_{c},**
wherein a is a number selected from 0, 1, 2, and 3, and b is a number selected from 1 and 2, and c is a number selected from 1, 2, and 3, and wherein a + b + c = 4 or a multiple of 4, and wherein R is an alkyl radical having 1 to 4 carbon atoms, and wherein R is branched or unbranched.

16. Method according to one of claims 14 or 15, wherein the indium chloride component is selected from R₂InCl, R₃In₂Cl₃, RInCl₂, InCl₃ - in particular, R₂InCl, R₃In₂Cl₃, RInCl₂, and mixtures thereof.

17. Method according to claim 13, wherein the alkylating agent is selected from R-MgX, R-Li, and R₃Al, wherein R is a branched or unbranched alkyl radical having 1 to 4 carbon atoms.

18. Method for producing a compound (C) having the general formula:
**R₂InR',**
comprising the following reaction steps:
c0) providing the compound (A) according to one of claims 1 through 10;
c1) separating dialkyl indium chloride from compound (A), wherein the dialkyl indium chloride satisfies the general formula:
**R₂InCl,**
wherein R is defined as above; and
c2) reacting R₂InCl with an alkylating agent to form compound (C),
wherein R' is a nucleophilic residue selected from the group consisting of branched or unbranched and substituted or unsubstituted alkyl, branched or unbranched and substituted or unsubstituted aryl, which can, in particular, be substituted with branched or unbranched alkyl or alkoxy groups, or with amine residues.

19. Method according to claim 18, wherein the alkylating agent is selected from R'MgX, R'Li, and R'₃Al.

20. Method according to one of claims 18 or 19, wherein R is methyl, and wherein R' is a Me₂N-(CH₂)₃ radical or an ethyl radical.

21. Method for producing an indium chloride component having the general formula:
**RₐIn_{b}Cl_{c},**
wherein a is a number selected from 0, 1, 2, and 3, and b is a number selected from 1 and 2, and c is a number selected from 1, 2, and 3, and wherein a + b + c = 4 or a multiple of 4 - particularly preferably, the sum of a, b, and c = 4 or 8 - wherein R is an alkyl radical having 1 to 4 carbon atoms, and the alkyl radical can be branched or unbranched and can, in particular, be ethyl or methyl, with the steps of
- providing a compound (A) of the formula R₃In₂Cl₃ according to one of claims 1 through 10;
- optionally isolating compound (A); wherein
the indium chloride component can, in particular, comprise: R₂InCl, R₃In₂Cl₃, RInCl₂, and mixtures thereof, or, in particular, Me₂InCl, Et₂InCl, MeInCl₂, EtInCl₂, Me₃In₂Cl₃, or Et₃In₂Cl₃ (where Et=ethyl and Me=methyl).

22. Method according to one of claims 13 or 17 for producing trialkyl indium having the formula R₃In, wherein R is an alkyl radical having 1 to 4 carbon atoms, and the alkyl radical can be branched or unbranched and, in particular, ethyl or methyl, comprising the steps of
- providing a compound (A) according to one of claims 1 through 10;
- optionally isolating compound (A);
- reacting compound (A) with an alkylating agent to form compound (B), and
- optionally isolating and further purifying it.

## Revendications

1. Procédé de production d'un composé (A) de formule générale :
**R₃In₂Cl₃**
comprenant les étapes de réaction de
a1) réaction de l'indium avec un donneur d'alkyle pour former le composé (A), le donneur d'alkyle étant le chlorure d'alkyle (RCI) et R étant un résidu alkyle ramifié ou non ramifié avec 1 à 4 atomes de carbone,
a2) et isolement facultatif du composé (A) à partir du mélange réactionnel ;
un composé de formule R₃In₂Cl₃ étant utilisé comme milieu réactionnel et le rapport de l'indium au milieu réactionnel étant de 0,5:10 à 2:1 ou de 1:1,5 à 1,5:1 (par rapport au poids).

2. Procédé selon la revendication 1 dans lequel R est le méthyle ou l'éthyle, en particulier le méthyle.

3. Procédé selon l'une des revendications 1 ou 2, dans lequel le rapport molaire de l'indium au composé de formule R₃In₂Cl₃ est de 1:1 à 8:1, en particulier de 1:1 à moins de 4:1.

4. Procédé selon la revendication 3, dans lequel le rapport molaire de l'indium au composé de formule R₃In₂Cl₃ est de 1:1 à 3,8:1 ou de 1:1 à 3,5:1.

5. Procédé selon une ou plusieurs des revendications 1 à 4 dans lequel le composé de formule R₃In₂Cl₃ est une combinaison de chlorure de dialkylindium (R₂InCl) et de dichlorure d'alkylindium (RInCl₂).

6. Procédé selon la revendication 5, dans lequel le composé de formule R₃In₂Cl₃ est une combinaison de chlorure de dialkylindium (R₂InCl) et de dichlorure d'alkylindium (RInCl₂) dans un rapport molaire de 30:70 à 50:50, en particulier de 32:68 à 42:58.

7. Procédé selon une ou plusieurs des revendications 1 à 6, dans lequel on utilise comme donneur d'alkyle du chlorure d'alkyle sous forme gazeuse.

8. Procédé selon une ou plusieurs des revendications 1 à 7, dans lequel 1,5 à 5 équivalents, en particulier 1,65 à 2,9 équivalents donneurs d'alkyle par équivalent indium sont utilisés.

9. Procédé selon une ou plusieurs des revendications 1 à 8, dans lequel l'indium dans l'étape de réaction a1) est disposé d'abord dans le récipient de réaction et le donneur d'alkyle est ajouté ensuite.

10. Procédé selon la revendication 9, dans lequel l'ajout du donneur d'alkyle est réalisé à des températures supérieures à 20 °C et avec une surpression de 0,1 bar à 6 bar.

11. Procédé selon une ou plusieurs des revendications 1 à 10, dans lequel la température de réaction est de 160 °C à 220 °C, en particulier de 180 °C à 200 °C.

12. Procédé selon une ou plusieurs des revendications 1 à 11, le procédé comprenant l'isolement du composé (A) comme étape a2) et l'isolement comprenant la séparation de composants secondaires liquides du mélange réactionnel se trouvant dans le récipient de réaction et le prélèvement ultérieur du composé (A) à partir du récipient de réaction.

13. Procédé de production d'un composé (B) de formule générale
**R₃In,**
dans laquelle R est un résidu alkyle ramifié ou non ramifié avec 1 à 4 atomes de carbone, comprenant les étapes de réaction de
- préparation du composé (A) selon l'une des revendications 1 à 12 ;
- réaction du composé (A) avec un agent alkylant pour former le composé (B).

14. Procédé de production d'un composé (B) de formule générale
**R₃In,**
comprenant les étapes de réaction de
b0) préparation du composé (A) selon l'une des revendications 1 à 12 ;
b1) réaction du composé (A) avec un alkyllithium pour former le lithium tétra-alkylindate (LiInR₄) et isolement du LiInR₄ à partir du mélange réactionnel et
b2) réaction du LiInR₄ avec un composant chlorure d'indium pour obtenir le composé (B)
dans lequel R est un résidu alkyle ramifié ou non ramifié avec 1 à 4 atomes de carbone.

15. Procédé selon la revendication 14, dans lequel le composant chlorure d'indium présente la formule générale :
**RₐIn_{b}Cl_{c}**
dans laquelle a est un nombre choisi parmi 0, 1, 2 et 3 et b est un nombre choisi parmi 1 et 2 et c est un nombre choisi parmi 1, 2 et 3 et dans laquelle a + b + c = 4 ou un multiple de 4 et dans laquelle R est un résidu alkyle avec 1 à 4 atomes de carbone et dans laquelle R est ramifié ou non ramifié.

16. Procédé selon l'une des revendications 14 ou 15, dans lequel le composant chlorure d'indium est choisi parmi R₂InCl, R₃In₂Cl₃, RInCl₂, InCl₃, en particulier R₂InCl, R₃In₂Cl₃, RInCl₂ et des mélanges de ceux-ci.

17. Procédé selon la revendication 13, dans lequel l'agent alkylant est choisi parmi R-MgX, R-Li et R₃Al, dans lesquels R est un résidu alkyle ramifié ou non ramifié avec 1 à 4 atomes de carbone.

18. Procédé de production d'un composé (C) de formule générale :
**R₂InR'**
comprenant les étapes de réaction suivantes :
c0) préparation du composé (A) selon l'une des revendications 1 à 10 ;
c1) séparation du chlorure de dialkylindium à partir du composé (A), le chlorure de dialkylindium ayant la formule générale :
**R₂InCl,**
dans laquelle R est tel que défini ci-dessus ; et
c2) réaction du R₂InCl avec un agent alkylant pour former le composé (C)
R' étant un résidu nucléophile choisi dans le groupe constitué d'alkyle ramifié ou non ramifié et substitué ou non substitué, aryle ramifié ou non ramifié et substitué ou non substitué, qui peuvent être en particulier substitués par des groupes alkyle ou alcoxy ramifiés ou non ramifiés ou par des résidus amine.

19. Procédé selon la revendication 18, dans lequel l'agent alkylant est choisi parmi R'MgX, R'Li et R'₃Al.

20. Procédé selon l'une des revendications 18 ou 19, dans lequel R est le méthyle et dans lequel R' est un résidu Me₂N-(CH₂)₃ ou un résidu éthyle.

21. Procédé de production d'un composé chlorure d'indium de formule générale :
**RₐIn_{b}Cl_{c}**,
dans laquelle a est un nombre choisi parmi 0, 1, 2 et 3 et b est un nombre choisi parmi 1 et 2 et c est un nombre choisi parmi 1, 2 et 3 et dans laquelle a + b + c = 4 ou un multiple de 4, de manière particulièrement préférée la somme de a, b et c = 4 ou 8, dans laquelle R est un résidu alkyle avec 1 à 4 atomes de carbone, le résidu alkyle pouvant être ramifié ou non ramifié et en particulier l'éthyle ou le méthyle, avec les étapes de
- préparation d'un composé (A) de formule R₃In₂Cl₃ selon l'une des revendications 1 à 10 ;
- facultativement isolement du composé (A) ;
le composant chlorure d'indium pouvant être en particulier : R₂InCl, R₃In₂Cl₃, RInCl₂ et des mélanges de ceux-ci ou en particulier Me₂InCl, Et₂InCl, MeInCl₂, EtInCl₂, Me₃In₂Cl₃ ou Et₃In₂Cl₃ (avec Et=éthyle et Me=méthyle).

22. Procédé selon l'une des revendications 13 ou 17 pour la production de trialkylindium de formule R₃In, dans laquelle R est un résidu alkyle avec 1 à 4 atomes de carbone, le résidu alkyle pouvant être ramifié ou non ramifié et en particulier l'éthyle ou le méthyle, avec les étapes de
- préparation d'un composé (A) selon l'une des revendications 1 à 10 ;
- facultativement isolement du composé (A) ;
- réaction du composé (A) avec un agent alkylant pour former le composé (B) et
- facultativement son isolement et une purification plus poussée.
